# EUROPEAN PATENT APPLICATION

(11) **EP 2 858 281 A1**
(43) Date of publication of application: **08.04.2015**
(21) Application number: 13794077.1
(22) Date of filing: 17.05.2013
(51) Int. Cl.: H04J 99/00, H04B 7/04, H04J 11/00

(54) **RECEPTION STATION DEVICE, TRANSMISSION STATION DEVICE, COMMUNICATION SYSTEM, RECEPTION METHOD, TRANSMISSION METHOD AND PROGRAM**

(30) Priority: 25.05.2012 JP 2012119975
(71) Applicant: Sharp Kabushiki Kaisha, Osaka-shi, Osaka 545-8522 (JP)
(72) Inventor: KUSASHIMA, Naoki, Osaka 545-8522 (JP)
(74) Representative: Müller-Boré & Partner Patentanwälte PartG mbB
(86) International application number: PCT/JP2013/063746
(87) International publication number: WO 2013/176042

(57) **Abstract**

A replica signal of a data signal addressed to another reception station is efficiently generated, and an interference cancellation process or an interference suppression process can be performed by using the replica signal. A replica generation unit 232 returns an interference data signal input from a decoding unit 209 to a symbol sequence which is generated by a transmission station before a frequency demapping process. The generated replica symbol sequence is output to an interference cancellation unit 231. The interference cancellation unit 231 subtracts a replica frequency domain signal input from the replica generation unit 232 from a frequency domain signal input from an FFT unit 204 to remove a signal of an undesired reception station. The symbol sequence as the subtraction result is output to a signal demultiplexing unit 206. Two or more types of replica signal generation processes are provided, the replica signal generation process is selected in accordance with a channel state or contents of a data signal reception process, a replica signal is generated by the selected replica signal generation process, and interference cancellation is performed.

## Description

### TECHNICAL FIELD

The present invention relates to a reception station device, a transmission station device, a communication system, a reception method, a transmission method, and a program, in which communication of data signals for a plurality of reception stations is performed using the same radio resource.

### BACKGROUND ART

In cellular wireless communication in recent years, a further increase in transmission rate is desired due to a rapid increase in data traffic. In order to increase the transmission rate, a method of performing communication using many radio frequency bands and data transmission time is effective. However, there is a limit to the radio frequency bands and data transmission time usable in the cellular wireless communication. Therefore, in the next-generation wireless communication standard which is an evolution of the cellular wireless communication standard such as Long Term Evolution (LTE) or LTE-Advanced (LTE-A), spectrum efficiency enhancing technologies for sending a larger amount of information with smaller radio frequency bands and shorter data transmission time are desired.

As one of the spectrum efficiency enhancing technologies, a multiple access method is used to perform communication of data signals for a plurality of reception stations (reception station devices, terminals, mobile stations, and user equipment (UE)) using the same radio frequency band and the same data transmission time. Examples of the multiple access method include code division multiple access (CDMA) in which orthogonal multiplexing is performed by orthogonal spreading codes, space division multiple access (SDMA) in which orthogonal multiplexing is performed by spaces using the multiple-input and multiple-output (MIMO) technology, and the like. In such multiple access methods, when a transmission station (a transmission station device, a base station, or eNodeB) transmits data signals to each of the reception stations using the same radio frequency band and the same data transmission time, the transmission station orthogonally multiplexes the data signals to be transmitted. Therefore, even when the same radio frequency band and the same data transmission time are used, each of the reception stations can decode the data signals. That is, in such communication technologies, an orthogonal demultiplexing process is performed in advance on the transmission station side, and thus communication of the data signals for the plurality of reception stations can be performed by using the same radio frequency band and the same data transmission time. Hereinafter, in this specification, a channel environment of radio transmission in which each of a radio frequency band, a data transmission time, a spatial stream, and an orthogonal spreading code is used is defined as a radio resource, and channel environments of radio transmission in which the four elements are the same are defined as the same radio resource. However, in code multiplexing using spreading codes and spatial multiplexing using the MIMO technology, the number of reception stations for multiplexing is limited. Therefore, in the current stage, it is difficult to further increase the spectrum efficiency only by such technologies.

As another spectrum efficiency enhancing technology, a method of demultiplexing, on the reception station side, a data signal addressed to another reception station which acts as interference may be used. For example, the reception station may use interference cancellation processes or interference suppression processes such as successive interference cancellation (SIC), parallel interference cancellation (PIC), and turbo SIC. In general, in a case where a transmission station transmits data signals to a plurality of reception stations using the same radio resource without performing a demultiplexing process in advance on the transmission station side, data signals addressed to the reception stations using the same radio resource interfere with each other and it is difficult for each of the reception stations to decode the data signals. However, by removing or reducing interference signals by the reception station, the reception station can receive the data signals addressed to the reception station from the data signals for the plurality of reception stations transmitted by the transmission station using the same radio resource without performing the demultiplexing process in advance. For example, regarding the interference cancellation technologies or the interference suppression technologies performed in the reception station, the reception station generates a replica signal of the data signal addressed to another reception station which acts as the interference signal among reception signals, and performs a process of removing or reducing the interference signal from the reception signals by using the replica signal. A communication system in which the interference cancellation technologies or the interference suppression technologies are used in the reception station is described in NPL 1.

### CITATION LIST

### [Non-Patent Document]

NPL 1: "Comparison and evaluation of user throughput characteristics between orthogonal multiple access and non-orthogonal multiple access using superposition coding and SIC in the downlink of cellular networks" by Tomita, Higuchi, IEICE Technical Report RCS 2011-58, pp. 135-140, June 2011.

### DISCLOSURE OF THE INVENTION

### Problems to be Solved by the Invention

Here, as the interference cancellation technologies or the interference suppression technologies used in the reception station postulated in the related art, a method of performing error correction decoding on the interference signal and a method of not performing error correction decoding during the generation of the replica of the interference signal are considered. In the method of performing error correction decoding on the interference signal, the coding gain of the replica signal of the interference signal is obtained by the error correction decoding process, and thus an effect of the interference cancellation process or the interference suppression is efficiently obtained. However, a heavy processing delay or load occurs due to the error correction decoding process. On the other hand, in the method of not performing error correction decoding on the interference signal, the process is relatively simple and easy. However, many bit errors occur in the replica signal generated by the reception station. When the interference cancellation process or the interference suppression process are performed by using the replica signal including many bit errors, the effect of the interference cancellation process or the interference suppression process is reduced, which becomes a factor that impedes efficient data communication.

The present invention has been made taking the forgoing points into consideration, and an object thereof is to provide a reception station device, a transmission station device, a communication system, a reception method, a transmission method, and a program capable of efficiently generating a replica signal of a data signal addressed to another reception station and performing an interference cancellation process or an interference suppression process by using the replica signal.

### Means for Solving the Problems

A first invention is a reception station device of a communication system in which communication is performed between a transmission station device and a plurality of reception station devices by using radio resources which at least partially overlap, including: a demodulating unit which performs a demodulation process on a desired data signal addressed to the reception station or an interference data signal addressed to another reception station; a decoding unit which performs a decoding process on the demodulated desired data signal addressed to the reception station or the demodulated interference data signal addressed to the other reception station; a data signal processing selection unit which selects a process of the desired data signal addressed to the reception station and a process of the interference data signal addressed to the other reception station from a reception signal; a replica generation unit which generates a replica signal of the interference data signal selected to be processed by the data signal processing selection unit by performing a modulation process on an output signal of the demodulating unit or by performing a coding process and the modulation process on an output signal of the decoding unit; and an interference cancellation unit which performs a reception data signal process that subtracts the replica signal from the reception data signal. With respect to the signal output from the interference cancellation unit, the data signal processing selection unit selects the process of the desired data signal, the demodulation process is performed by the decoding unit, and the decoding process is performed by the decoding unit.

A second invention is the reception station device of the first invention, in which the decoding unit performs a plurality of error correction decoding processes on the signal input from the demodulating unit, the replica generation unit performs a plurality of error correction coding processes and the modulation process on the signal subjected to the error correction decoding processes and ends the error correction decoding processes while the decoding unit performs a reception process of the interference data signal, and the replica generation unit performs a process of generating the replica signal by performing the coding processes and the modulation process.

A third invention is the reception station device of the first invention, in which a process switching the signal input from the demodulating unit between a process of outputting the signal to the replica generation unit without performing the error correction decoding process thereon and a process of outputting the signal to the replica generation unit after performing the error correction decoding process thereon, according to a branch condition at the time of the reception process of the interference data signal, and the replica generation unit switches between the modulation process and the coding process and the modulation process corresponding to the switching process to generate the replica signal.

A fourth invention is the reception station device of the third invention, in which the decoding unit includes a plurality of error detection units which perform an error detection process during the reception process of a single data signal, is configured to perform error detection on a data signal sequence included in a radio resource range in which one of the plurality of error detection units is determined, and uses the result of the error detection as the branch condition.

A fifth invention is the reception station device of the fourth invention, in which the branch condition is a relationship between the number of errors in the determined radio resource range output by the error detection unit and a threshold, and the error detection unit switches between a process of performing the modulation process by the replica generation unit after performing the demodulation process by the demodulating unit in a case where the number of errors is lower than the threshold and a process of performing the coding process and the modulation process by the replica generation unit after performing the demodulation process by the demodulating unit and performing the decoding process by the decoding unit in a case where the number of errors is higher than the threshold.

A sixth invention is the reception station device of the third invention, including: a power ratio calculating unit which performs a process of calculating a power ratio of interference data signal power during the reception data signal process to power of the data signal among the reception data signals except the interference data signal in the determined radio resource range, in which the power ratio is used as the branch condition.

A seventh invention is the reception station device of the sixth invention, in which the branch condition is a relationship between the power ratio in the determined radio resource range and a threshold, the modulation process is performed after the demodulation process is performed in a case where the power ratio is higher than the threshold, and the coding process and the modulation process are performed after the demodulation process and the decoding process are performed in a case where the power ratio is lower than the threshold.

An eighth invention is the reception station device of any of the first to seventh inventions, in which the control signal processing unit includes a control information acquisition unit which acquires radio control information addressed to the reception station and radio control information addressed to the other one or more reception stations associated with the radio control information addressed to the reception station from the reception signal, and the data signal processing selection unit which outputs radio control information of the selected signal process.

A ninth invention is the reception station device of the eighth invention, in which the control information acquisition unit acquires information on an order of the reception data signal process from a configuration order of the radio control information.

A tenth invention is the reception station device of the eighth invention, in which resource map information for monitoring the radio resource by which the reception station device performs the reception process of the interference data signal is generated from resource map information included in the a plurality of pieces of acquired radio control information.

An eleventh invention is the reception station device of the tenth invention, in which comparison map information for performing determination of the branch condition is generated from the resource map information, and the process is switched by determining the branch condition on the basis of the comparison map information.

A twelfth invention is a transmission station device of a communication system in which communication is performed between the transmission station device and a plurality of reception station devices by using radio resources which at least partially overlap, including: a transmission processing unit which multiplexes and transmits data signals addressed to the plurality of reception stations by using the radio resource in which at least a portion of the radio resource used by each of the plurality of reception station devices overlaps, the transmission processing unit including a coding unit which performs a plurality of different error correction coding processes during a single data signal transmission process.

A thirteenth invention is the transmission station device of the twelfth invention, in which the transmission processing unit has at least one of a non-orthogonal multiplexing method transmission configuration having a superposition combining unit that superposes the data signals addressed to the plurality of reception stations and a partial spatial orthogonal multiplexing method transmission configuration having a multi-user precoding unit that performs a spatial demultiplexing process on the data signals addressed to the plurality of reception stations by using a multi-user precoding weight.

A fourteenth invention is the transmission station device of the thirteenth invention, in which the transmission processing unit is configured to transmit radio control information of the reception station device and multiplexed radio control information addressed to one or more reception stations linked to the radio control information of the reception station device.

A fifteenth invention is the transmission station device of the twelfth invention, in which the transmission processing unit has an inter-station cooperation transmission configuration in which radio control information addressed to the other cell reception station that is present in the other cell is acquired from the other transmission station device included in the other cell and is transmitted from the transmission station device in cooperation with the transmission station device in the other cell by using the radio resource in which at least a portion of the radio resource used by each of the plurality of reception station devices overlaps, and a configuration in which radio control information of the reception station device in the cell and the radio control information addressed to the reception station in the other one or more cells linked to the radio control information of the reception station device in the cell are transmitted.

A sixteenth invention is a communication system in which communication is performed between a transmission station device and a plurality of reception station devices by using radio resources which at least partially overlap, including: the reception station device of the second invention; and the transmission station device of any of the twelfth to fifteenth inventions.

A seventeenth invention is a transmission station device of a communication system in which communication is performed between a transmission station device and a plurality of reception station devices by using radio resources which at least partially overlap, including: a transmission processing unit which multiplexes and transmits data signals addressed to the plurality of reception stations by using the radio resource in which at least a portion of the radio resource used by each of the plurality of reception station devices overlaps, the transmission processing unit including a coding unit which performs a plurality of error detection coding processes during a single data signal transmission process and performs the error detection coding process on the data signal included in a radio resource range in which one of the plurality of error detection coding processes is determined.

An eighteenth invention is the transmission station device of the seventeenth invention, in which the transmission processing unit has at least one of a non-orthogonal multiplexing method transmission configuration having a superposition combining unit that superposes the data signals addressed to the plurality of reception stations and a partial spatial orthogonal multiplexing method transmission configuration having a multi-user precoding unit that performs a spatial demultiplexing process on the data signals addressed to the plurality of reception stations by using a multi-user precoding weight.

A nineteenth invention is the transmission station device of the eighteenth invention, having a configuration in which radio control information of the reception station device and multiplexed radio control information addressed to one or more reception stations linked to the radio control information of the reception station device are transmitted.

A twentieth invention is the transmission station device of the seventeenth invention, in which the transmission processing unit has an inter-station cooperation transmission configuration in which radio control information addressed to the other cell reception station that is present in the other cell is acquired from the other transmission station device included in the other cell and is transmitted from the transmission station device in cooperation with the transmission station device in the other cell by using the radio resource in which a portion or the entirety of the radio resource used by each of the plurality of reception station devices is the same, and a configuration in which radio control information of the reception station device in the cell and the radio control information addressed to the reception station in the other one or more cells linked to the radio control information of the reception station device in the cell are transmitted.

A twenty-first invention is a communication system in which communication is performed between a transmission station device and a plurality of reception station devices by using radio resources which at least partially overlap, including: the reception station device of the fourth or fifth invention; and the transmission station device of any of the seventeenth to twentieth inventions.

A twenty-second invention is a transmission station device of a communication system in which communication is performed between a transmission station device and a plurality of reception station devices by using radio resources which at least partially overlap, including: a transmission processing unit which multiplexes and transmits data signals addressed to the plurality of reception stations by using the radio resource in which at least a portion of the radio resource used by each of the plurality of reception station devices overlaps, the transmission processing unit being configured to perform notification of each piece of data signal transmission power value information addressed to the plurality of reception stations, using each piece of the radio control information addressed to the plurality of reception stations.

A twenty-third invention is the transmission station device of the twenty-second invention, in which a value of notification of the transmission power information of the data signal addressed to the reception station is a value obtained by quantizing the transmission power value of the data signal addressed to the reception station between 0 and a reference power value.

A twenty-fourth invention is the transmission station device of the twenty-third invention, in which the reference power value is the maximum acceptable transmission power value.

A twenty-fifth invention is the transmission station device of the twenty-fourth invention, in which the reference power value is a transmission power value of the data signal addressed to the reception station multiplexed in an order immediately before the reception station device, and is the maximum acceptable transmission power value in a case where the reception station device multiplexed in the order immediately beforehand is not present.

A twenty-sixth invention is the reception station device of the sixth, seventh, or eighth invention, in which from the transmission power value information of the data signal addressed to the reception station included in the radio control information addressed to the plurality of reception stations transmitted by the transmission station device of any of the fifteenth to seventeenth inventions and the reference power value, a quantization range is acquired and the transmission power value information of the data signal addressed to the reception station is acquired.

A twenty-seventh invention is a communication system in which radio resources used to perform communication between a transmission station device and a plurality of reception station devices overlap, including: the reception station device of the twenty-sixth invention and the transmission station device of any of the twenty-second to twenty-fifth inventions.

A twenty-eighth invention is a transmission station device of a communication system in which communication is performed between the transmission station device and a plurality of reception station devices by using radio resources which at least partially overlap, including: a transmission processing unit which multiplexes and transmits data signals addressed to the plurality of reception stations by using the radio resource in which at least a portion of the radio resource used by each of the plurality of reception station devices overlaps, the transmission processing unit being configured to transmit a reference signal addressed to the reception station transmitted simultaneously with the data signal addressed to the reception station at transmission power which is obtained by adding transmission power of the data signal addressed to the reception station to the total of transmission power of the data signals of the reception stations multiplexed in an order before the reception station device.

A twenty-ninth invention is the reception station device of the sixth, seventh, or eighth invention, in which a reference signal addressed to each reception station transmitted by the transmission station device of the twenty-eighth invention is received, reception power of the reference signal in an order of the reception station device that performs the process of the interference data signal is subtracted from reception power of the reference signal addressed to each reception station, thereby obtaining reception power value information of the data signal addressed to each reception station.

A thirtieth invention is a communication system in which radio resources used to perform communication between a transmission station device and a plurality of reception station devices overlap, including: the reception station device of the twenty-ninth invention and the transmission station device of the twenty-eighth invention.

A thirty-first invention is a transmission station device of a communication system in which communication is performed between a transmission station device and a plurality of reception station devices by using radio resources which at least partially overlap, including: a transmission processing unit which multiplexes and transmits data signals addressed to the plurality of reception stations by using the radio resource that is the same as a portion or the entirety of the radio resource used by each of the plurality of reception station devices, in which the transmission processing unit is configured to perform a process of calculating a power ratio of estimation reception power of the data signal addressed to a single reception station of the plurality of reception station devices to the sum of the total of estimation reception power of the data signals addressed to the reception stations multiplexed with the single reception station device and the interference noise power of the single reception station device in the determined radio resource range.

A thirty-second invention is a reception method of a communication system in which communication is performed between the transmission station device and a plurality of reception station devices by using radio resources which at least partially overlap, including: a step of performing a process of identifying a desired data signal addressed to the reception station and an interference data signal addressed to the other reception station from a reception signal; a step of generating a replica signal by performing a modulation process after performing a demodulation process on the interference data signal or by performing a coding process and a modulating process thereon after performing the demodulation process and a decoding process, and performing a reception data signal process of subtracting the replica signal from the reception data signal; and a step of performing a reception data signal process of ending the reception process by performing the demodulation process and the decoding process on the desired data signal.

A thirty-third invention is a program for executing each step in the reception method of the thirty-second invention on the reception station device.

A thirty-fourth invention is a transmission method of a communication system in which communication is performed between the transmission station device and a plurality of reception station devices by using radio resources which at least partially overlap, including: a step of multiplexing and transmitting data signals addressed to the plurality of reception stations by using the radio resource in which at least a portion of the radio resource used by each of the plurality of reception station devices overlaps; and a step of performing a plurality of different error correction coding processes during a single data signal transmission process.

A thirty-fifth invention is a program for executing each step in the transmission method of the thirty-fourth invention on the transmission station device.

A thirty-sixth invention is a transmission station device of a communication system in which communication is performed between the transmission station device and a plurality of reception station devices by using radio resources which at least partially overlap, including: a step of multiplexing and transmitting data signals addressed to the plurality of reception stations by using the radio resource in which at least a portion of the radio resource used by each of the plurality of reception station devices overlaps; and a step of performing a plurality of error detection coding processes during a single data signal transmission process and performing the error detection coding process on the data signal included in a radio resource range in which one of the plurality of error detection coding processes is determined.

A thirty-seventh invention is a program for executing each step in the transmission method of the thirty-sixth invention on the transmission station device.

### Effects of the Invention

According to the present invention, the replica signal of the data signal addressed to the other reception station can be efficiently generated, and the interference cancellation process or the interference suppression process can be performed by using the replica signal.

### BRIEF DESCRIPTION OF THE DRAWINGS

[Fig. 1] Fig. 1 is a diagram schematically illustrating a wireless communication system according to a first embodiment of the present invention.
[Fig. 2] Fig. 2 is a diagram illustrating a first example of radio resource allocation of a reception station according to the first embodiment of the present invention.
[Fig. 3] Fig. 3 is a diagram illustrating a second example of radio resource allocation of the reception station according to the first embodiment of the present invention.
[Fig. 4] Fig. 4 is a diagram illustrating a third example of radio resource allocation of the reception station according to the first embodiment of the present invention.
[Fig. 5] Fig. 5 is a constellation diagram of a signal transmitted in a non-orthogonal multiplexing method of a transmission/reception stations configuration 1 according to the first embodiment of the present invention.
[Fig. 6] Fig. 6 is a block diagram illustrating the configuration of a transmission station device which performs transmission in a partially orthogonal multiplexing method of the transmission/reception stations configuration 1 according to the first embodiment of the present invention.
[Fig. 7] Fig. 7 is a block diagram illustrating the configuration of a coding unit in the transmission station device of the transmission/reception stations configuration 1 according to the first embodiment of the present invention.
[Fig. 8] Fig. 8 is a block diagram illustrating the configuration of the transmission station device which performs transmission in the non-orthogonal multiplexing method of the transmission/reception stations configuration 1 according to the first embodiment of the present invention.
[Fig. 9] Fig. 9 is a block diagram illustrating the configuration of a device of a reception station UE1 of the transmission/reception stations configuration 1 according to the first embodiment of the present invention.
[Fig. 10] Fig. 10 is a block diagram illustrating the configuration of a decoding unit in the device of the reception station UE1 of the transmission/reception stations configuration 1 according to the first embodiment of the present invention.
[Fig. 11] Fig. 11 is a block diagram illustrating the configuration of a control signal processing unit in the device of the reception station UE1 of the transmission/reception stations configuration 1 according to the first embodiment of the present invention.
[Fig. 12] Fig. 12 is a block diagram illustrating the configuration of a device of a reception station UE2 of the transmission/reception stations configuration 1 according to the first embodiment of the present invention.
[Fig. 13] Fig. 13 is a block diagram illustrating the configuration of a control signal processing unit in the reception station device UE2 of the transmission/reception stations configuration 1 according to the first embodiment of the present invention.
[Fig. 14] Fig. 14 is a block diagram illustrating the device configuration of a replica generation unit of the transmission/reception stations configuration 1 according to the first embodiment of the present invention.
[Fig. 15] Fig. 15 is a block diagram illustrating the configuration of a recoding unit in the replica generation unit of the transmission/reception stations configuration 1 according to the first embodiment of the present invention.
[Fig. 16] Fig. 16 is a flowchart illustrating a process of acquiring a desired data signal by the device of the reception station UE2 of the transmission/reception stations configuration 1 according to the first embodiment of the present invention.
[Fig. 17] Fig. 17 is an example of a package type control information configuration acquired by the device of the reception station UE2 of the transmission/reception stations configuration 1 according to the first embodiment of the present invention.
[Fig. 18] Fig. 18 is an example of a connection type control information configuration acquired by the device of the reception station UE2 of the transmission/reception stations configuration 1 according to the first embodiment of the present invention.
[Fig. 19] Fig. 19 is a flowchart of a process of acquiring the connection type control information configuration acquired by the device of the reception station UE2 of the transmission/reception stations configuration 1 according to the first embodiment of the present invention.
[Fig. 20] Fig. 20 is a first schematic diagram of radio resource allocation and power allocation of a reference signal of the transmission/reception stations configuration 1 according to the first embodiment of the present invention.
[Fig. 21] Fig. 21 is a second schematic diagram of radio resource allocation and power allocation of the reference signal of the transmission/reception stations configuration 1 according to the first embodiment of the present invention.
[Fig. 22] Fig. 22 is a diagram schematically illustrating a multi-cell wireless communication system to which the first embodiment of the present invention can be applied.
[Fig. 23] Fig. 23 is a diagram schematically illustrating a heterogeneous multi-cell wireless communication system to which the first embodiment of the present invention can be applied.
[Fig. 24] Fig. 24 is a block diagram illustrating the configuration of a device of a reception station UE2 of a transmission/reception stations configuration 2 according to the first embodiment of the present invention.
[Fig. 25] Fig. 25 is a block diagram illustrating the device configuration of a replica generation unit of the transmission/reception stations configuration 2 according to the first embodiment of the present invention.
[Fig. 26] Fig. 26 is a flowchart of a process of acquiring a desired data signal by the device of the reception station UE2 of the transmission/reception stations configuration 2 according to the first embodiment of the present invention.
[Fig. 27] Fig. 27 is a block diagram illustrating the device configuration of a coding unit in a transmission station of a transmission/reception stations configuration 3 according to the first embodiment of the present invention.
[Fig. 28] Fig. 28 is a block diagram illustrating the device configuration of a decoding unit in a device of a reception station UE2 of the transmission/reception stations configuration 3 according to the first embodiment of the present invention.
[Fig. 29] Fig. 29 is a block diagram illustrating the device configuration of a recoding unit in a replica generation unit in the device of the reception station UE2 of the transmission/reception stations configuration 3 according to the first embodiment of the present invention.
[Fig. 30] Fig. 30 is a block diagram illustrating the device configuration of the recoding unit in the device of the reception station UE2 of the transmission/reception stations configuration 3 according to the first embodiment of the present invention.
[Fig. 31] Fig. 31 is a flowchart of a process of acquiring a desired data signal by a device of a reception station UE2 according to a second embodiment of the present invention.
[Fig. 32] Fig. 32 is a block diagram illustrating the device configuration of a coding unit in a transmission station according to the second embodiment of the present invention.
[Fig. 33] Fig. 33 is a block diagram illustrating the device configuration of a decoding unit in a device of a reception station UE2 according to a third embodiment of the present invention.
[Fig. 34] Fig. 34 is flowchart illustrating processes from decoding to recoding in an interference cancellation process of the device of the reception station UE2 according to the third embodiment of the present invention.
[Fig. 35] Fig. 35 is a block diagram illustrating the device configuration of the decoding unit in the device of the reception station UE2 according to the third embodiment of the present invention.
[Fig. 36] Fig. 36 is flowchart illustrating processes from decoding to recoding in the interference cancellation process of the device of the reception station UE2 according to the third embodiment of the present invention.

### BEST MODE FOR CARRYING OUT THE INVENTION

Hereinafter, an embodiment of the present disclosure will be described with reference to the accompanying drawings.

### (First Embodiment)

In this embodiment, a case where a communication line is a downlink will be described. In the following description, the number of reception stations which perform communication by using the same radio resource is two. However, this embodiment is not limited thereto, and the number of reception stations may be three or more. Further, in the description, a single transmission station performs transmission. However, two or more transmission stations may perform transmission by using the same radio resource. In this case, a plurality of transmission stations perform transmission at different transmission positions, and thus space resources used by the transmission stations are different. However, when reception stations use the same space resource, this means that the same radio resource is used. Therefore, "the same radio resource from two or more transmission stations" means the same radio resource when the reception station receives carriers from two or more transmission stations.

Here, a communication system using a multiple access method in which the transmission station transmits data signals to a plurality of reception stations by using the same radio resource without performing a demultiplexing process in advance on the transmission station side is called a non-orthogonal multiple access method. There are a plurality of transmission methods corresponding to the non-orthogonal multiple access method. One of the transmission methods corresponding to the non-orthogonal multiple access method is a partial spatial orthogonal multiplexing method. The partial spatial orthogonal multiplexing method is a transmission method of multiplying a multi-user precoding matrix which is an upper triangular matrix by a transmission data signal to obtain a channel matrix between the plurality of reception stations and transmitting signals after precoding from a plurality of antennas. Another transmission method corresponding to the non-orthogonal multiple access method is a non-orthogonal multiplexing method. The non-orthogonal multiplexing method is a transmission method of combining data signals addressed to the plurality of reception stations among the reception stations that receive the multiplexed data signals into a single modulated symbol by using a technique such as superposition coding or hierarchical modulation and transmitting the combined signal from a single or a plurality of antennas.

The reception station in the non-orthogonal multiple access method preferably has an interference cancellation technique or an interference suppression technique. In the interference cancellation technique or the interference suppression technique, a replica signal of a data signal addressed to another reception station is efficiently generated, and an interference cancellation process or an interference suppression process using the replica signal is performed.

As the differences from code division multiple access (CDMA) or space division multiple access (SDMA) which is another multiple access method that shares the same radio resource, the reception station can detect the data signal even in a spatially non-orthogonal or partially orthogonal state without performing spectrum spreading by an orthogonal code sequence. That is, the non-orthogonal multiple access method can improve spectrum efficiency with a small number of antennas compared to a MIMO communication method using a plurality of antennas. The non-orthogonal multiple access method can be combined with an existing multiple access method such as CDMA or SDMA. Therefore, the number of reception stations subjected to simultaneous communication (multiplexing) can be further increased, and thus high spectrum efficiency can be achieved.

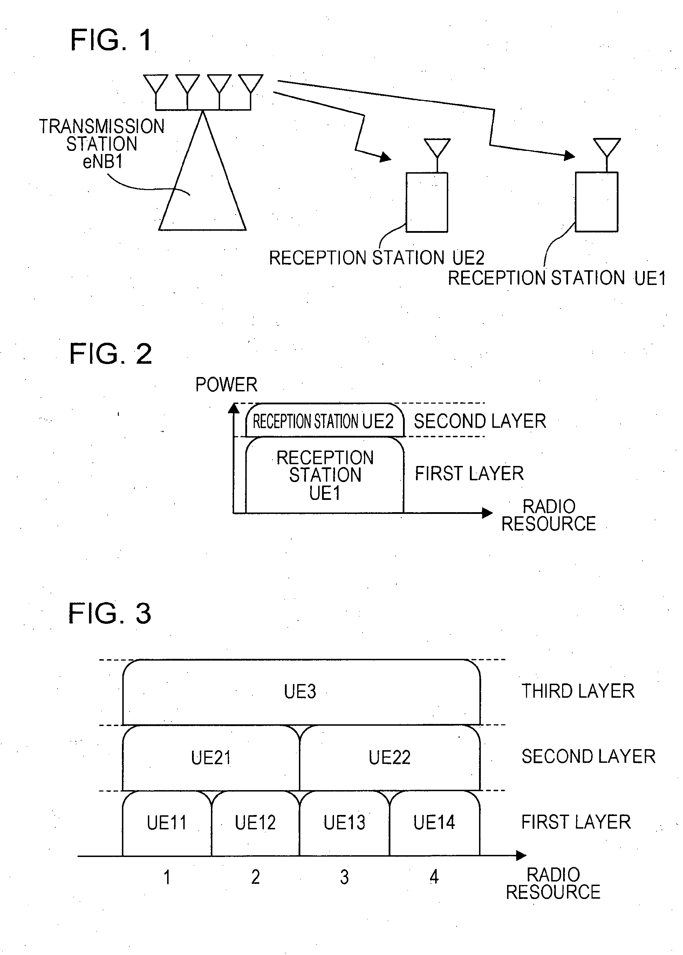

Fig. 1 is a conceptual diagram illustrating a communication system according to this embodiment. The communication system includes a transmission station eNB1, a reception station UE1, and a reception station UE2. In an example illustrated in Fig. 1, the reception station UE1 is located at a position farther than the reception station UE2 from the transmission station eNB1. Therefore, the signal to noise power ratio (SNR) of a reception signal in the reception station UE1 is lower than the signal to noise power ratio of a reception signal in the reception station UE2 due to distance attenuation in the signals.

Figs. 2, 3, and 4 are diagrams illustrating an example of radio resource allocation to the reception stations according to this embodiment.

In the non-orthogonal multiple access method illustrated in Fig. 2, the reception station UE1 and the reception station UE2 share the same radio resource, and receive a multiplexed signal in the non-orthogonal multiplexing method. In addition, a signal addressed to the reception station UE1 and a signal addressed to the reception station UE2 are transmitted to have different transmission powers. That is, the power of the signal addressed to the reception station UE1 is higher than the power of the signal addressed to the reception station UE2. Accordingly, each of the reception stations in the non-orthogonal multiple access method can acquire a data signal addressed to the reception station. For example, in the reception station UE1, in a case where the power of the signal addressed to the reception station UE2 is substantially equal to or less than the noise power, the signal addressed to the reception station UE1 is transmitted at a relatively higher power than that of the signal addressed to the reception station UE2, and thus the reception station UE1 can perform a receiving process without concerning the signal addressed to the reception station UE2. That is, the reception station UE1 can acquire the data signal addressed to the reception station UE1 in the same reception method as in the related art. On the other hand, since the signal addressed to the reception station UE1 is significant interference to the reception station UE2, it is difficult to extract the signal addressed to the reception station UE2. In a case of extracting the signal addressed to the reception station UE2, the reception station UE2 first detects the signal of the reception station UE1, and removes the same signal from the reception signal of the reception station UE2. Therefore, the reception station UE2 can acquire the data signal addressed to the reception station UE2.

A multiplexing relationship of the above-described non-orthogonal multiple access method is defined using multiplexing layers. Regarding the reception stations allocated to the multiplexing layers, in a case where the other reception stations are allocated to the lower layers, the signals addressed to the reception stations allocated to the lower layers are transmitted using superposed resources at high transmission powers, and thus interference cancellation or interference suppression needs to be performed on the signals addressed to all the reception stations allocated to the lower layers by using an interference cancellation mechanism. On the other hand, the receiving process can be performed without concerning the reception stations allocated to the upper layers. That is, the reception station UE1 is allocated to a first layer, and the reception station UE2 is allocated to a second layer.

In this embodiment, an allocation radio frequency bandwidth of the reception station is defined as a transport block, and error correction decoding is performed by using a signal included in the transport block. In addition, the minimum allocation radio frequency bandwidth is defined as a resource block, and each resource block is indicated by a single radio resource number.

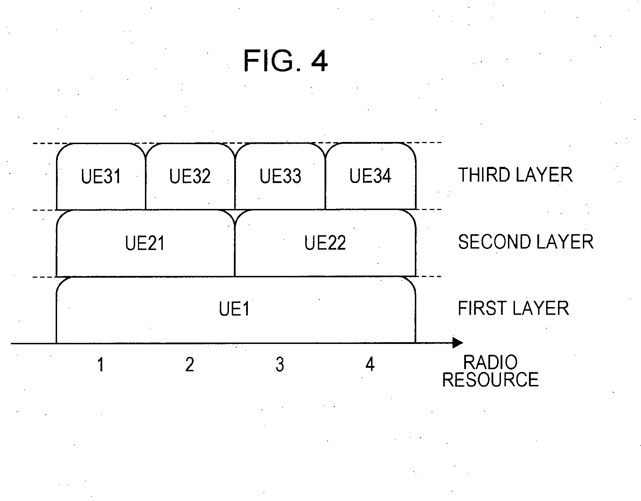

A case where the allocated radio resource amounts are independently set in the multiplexing layers is illustrated in Figs. 3 and 4. Fig. 3 is a diagram illustrating an example of radio resource allocation to the reception stations according to this embodiment in a case where the resource allocation units of upper layers are larger. The reception station allocated to the upper layer has to decode the signals allocated to all the other reception stations of the lower layers and perform the interference cancellation. Therefore, for example, in order to decode a signal addressed to a reception station UE3 allocated to a third layer, signals addressed to six reception stations UE11, UE12, UE13, UE14, UE21, and UE22 need to be decoded and removed. Fig. 4 is a diagram illustrating an example of radio resource allocation to the reception stations according to this embodiment in a case where the resource allocation units of lower layers are larger. Similarly, in order to decode a signal addressed to a reception station UE31 allocated to the third layer, signals addressed to only two reception stations UE1 and UE21 may need to be decoded and removed. However, a wider band than the radio resources to which desired signals are allocated needs to be monitored, and thus in the above-described example, radio resource numbers 2, 3, and 4 are also monitored in addition to the radio resource number 1. This embodiment can also be applied to any case of Figs. 2, 3, and 4.

### <Reception Signal Model>

Here, the partial spatial orthogonal multiplexing method and the non-orthogonal multiplexing method which can be applied to reception station devices of this embodiment will be described by using a reception signal model. In addition, the number of reception stations is two in the description. However, the same reception signal model is expressed even in a case where the number of reception stations is three or more.

### [1. Reception Signal Model in Partial Spatial Orthogonal Multiplexing Method]

First, channel state information is defined. In this embodiment, when a channel matrix between a transmit antenna group j allocated to transmission to a reception station UEi and a receive antenna group i of the reception station UEi is denoted by Hᵢⱼ, and the channel matrix H is defined by the following Expression (1).

[Expression 1] $H = \left[\begin{matrix}{H}_{11} & {H}_{12} \\ {H}_{21} & {H}_{22}\end{matrix}\right] = \left[\begin{matrix}{H}_{1} \\ {H}_{2}\end{matrix}\right]$

Here, Hᵢ=[Hᵢ₁, Hᵢ₂] is the channel matrix between all the transmit antennas of the transmission station and the receive antennas of the reception station UEi. The channel matrix H can be decomposed by using QR decomposition as in the following Expression (2).

[Expression 2] $H = LQ = \left[\begin{matrix}{L}_{11} & O \\ {L}_{21} & {L}_{22}\end{matrix}\right] ⁢ Q$

When the data signal received by the reception station UEi is denoted by yᵢ, the data signal transmitted from the transmission station to the reception station UEi is denoted by xᵢ, and a unitary matrix Q^{H} obtained by the QR decomposition is used as a multi-user precoding weight W, the reception signal model in the partial spatial orthogonal multiplexing method is expressed by the following Expression (3).

[Expression 3] $\begin{matrix}\left[\begin{matrix}{y}_{1} \\ {y}_{2}\end{matrix}\right] = y = HWx + n \\ = \left[\begin{matrix}{L}_{11} & O \\ {L}_{21} & {L}_{22}\end{matrix}\right] ⁢ \left[\begin{matrix}{x}_{1} \\ {x}_{2}\end{matrix}\right] + \left[\begin{matrix}{n}_{1} \\ {n}_{2}\end{matrix}\right] \\ {y}_{1} = {L}_{11} ⁢ {x}_{1} + {n}_{1} \\ {y}_{2} = {L}_{22} ⁢ {x}_{2} + {L}_{21} ⁢ {x}_{1} + {n}_{2}\end{matrix} }$

Here, nᵢ is an additive white noise received by the reception station UEi.

According to the Expression (3), a desired data signal L₁₁x₁ of the reception station UE1 is transmitted while the reception station UE1 does not receive interference. On the other hand, the reception station UE2 receives an interference data signal L₂₁x₁ of the reception station UE1, and a desired data signal L₂₂x₂ of the reception station UE2 is transmitted. The reception station device of the reception station UE2 is equipped with a mechanism that removes the interference data signal L₂₁x₁ of the reception station UE1 and thus can identify the desired data signal L₂₂x₂.

### [2. Reception Signal Model In Non-orthogonal Multiplexing Method]

As another technique for performing multiplexing by sharing the same radio resource, there is superposition coding or hierarchical modulation. Symbols transmitted by the transmission station are set by the following Expression (4).

[Expression 4] $x = \left[\sqrt{{α}_{1}}⁢{x}_{1}+\sqrt{{α}_{2}}⁢{x}_{2}\right]$

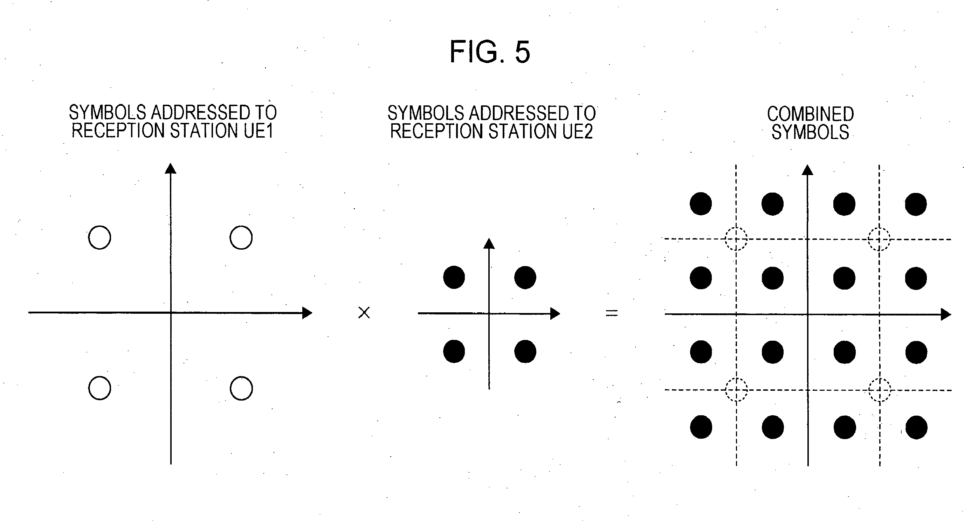

Here, αᵢ is a power distribution coefficient allocated to the reception station UEi. Fig. 5 illustrates an example of a constellation which is combined in the non-orthogonal multiplexing method. As illustrated in Fig. 5, when a QPSK symbol addressed to the reception station UE1 and a QPSK symbol addressed to the reception station UE2 which is transmitted at an amplitude that is the half of that of the symbol addressed to the reception station UE1 are combined, the combined symbol is expressed in 16 ways, and thus the data signals to the two reception stations can be collectively transmitted. The reception signal model of the non-orthogonal multiplexing method is expressed by the following Expression (5).

[Expression 5] $\begin{matrix}\left[\begin{matrix}{y}_{1} \\ {y}_{2}\end{matrix}\right] = y = Hx + n \\ = \left[\begin{matrix}{H}_{1} \\ {H}_{2}\end{matrix}\right] ⁢ \sqrt{{α}_{1}} ⁢ {x}_{1} + \sqrt{{α}_{2}} ⁢ {x}_{2} + \left[\begin{matrix}{n}_{1} \\ {n}_{2}\end{matrix}\right] \\ {y}_{1} = \sqrt{{α}_{1}} ⁢ {H}_{1} ⁢ {x}_{1} + {{n}^{˜}}_{1} \\ {y}_{2} = \sqrt{{α}_{2}} ⁢ {H}_{2} ⁢ {x}_{2} + \sqrt{{α}_{1}} ⁢ {H}_{2} ⁢ {x}_{1} + {n}_{2}\end{matrix} }$

In the reception station UE1, an interference data signal √α₂H₁x₂ has a smaller reception power than that of a desired data signal √a₁H₁x₁ and is thus regarded as noise such that demodulation and decoding thereof can be performed. In the reception station UE2, an interference data signal √α₁H₂x₁ has a greater reception power than that of a desired data signal √α₂H₂x₂, and thus a mechanism that removes a data signal √α₁H₂x₁ addressed to the reception station UE1 is needed.

### <Configuration of Transmission/Reception Stations>

Next, the configurations of a transmission station device and a reception station device which can perform signal transmission and signal detection in the partial spatial orthogonal multiplexing method or the non-orthogonal multiplexing method described above, or a multiplexing method which is a combination of the partial spatial orthogonal multiplexing method and the non-orthogonal multiplexing method will be described with reference to the drawings.

### (1) Transmission/Reception Configuration 1

First, a transmission/reception stations configuration 1 for performing error correction decoding on an interference signal will be described. A replica signal of the interference signal obtains a coding gain by performing the error correction decoding on the interference signal.

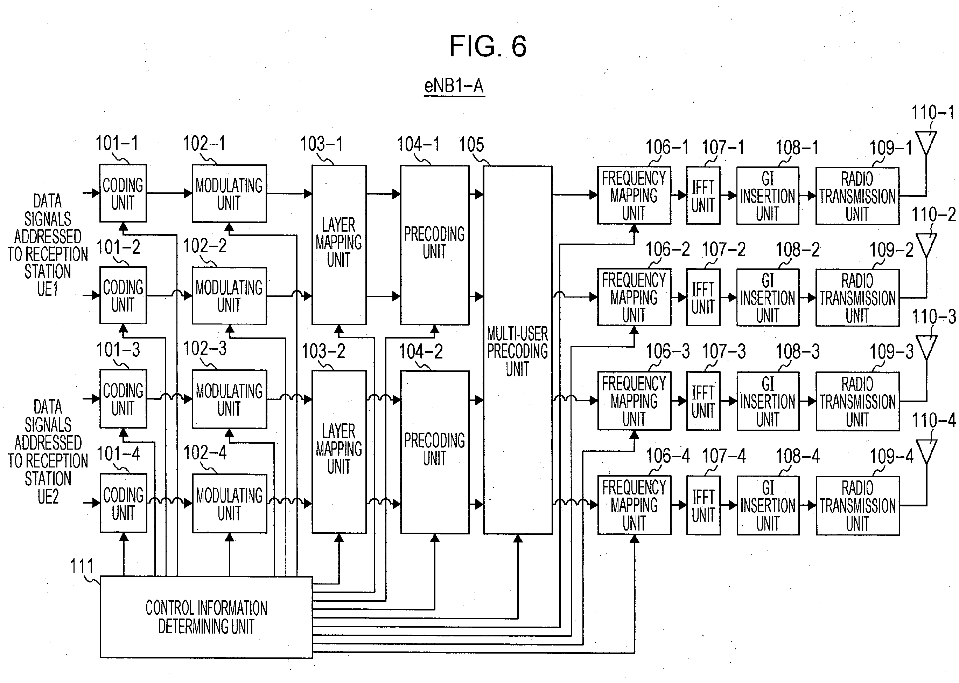

Fig. 6 is a schematic diagram illustrating the configuration of the transmission station device which performs transmission in the partial spatial orthogonal multiplexing method according to this embodiment.

A transmission station device eNB1-A is configured to include coding units 101 (101-1 to 101-4), modulating units 102 (102-1 to 102-4), layer mapping units 103 (103-1 and 103-2), precoding units 104 (104-1 and 104-2), multi-user precoding units 105, frequency mapping units 106 (106-1 to 106-4), IFFT units 107 (107-1 to 107-4), GI insertion units 108 (108-1 to 108-4), radio transmission units 109 (109-1 to 109-4), antenna units 110 (110-1 to 110-4), and a control information determining unit 111. "OOO-1 and OOO-2" of the coding units 101, the modulating units 102, the frequency mapping units 106, the IFFT units 107, the GI insertion units 108, the radio transmission units 109, and the antenna units 110 process a data signal addressed to the reception station UE1, and "OOO-3 and OOO-4" thereof process a data signal addressed to the reception station UE2. In addition, "OOO-1" of the layer mapping units 103 and the precoding units 104 process the data signal addressed to the reception station UE1, and "OOO-2" thereof process the data signal addressed to the reception station UE2.

A section constituted by the coding units 101, the modulating units 102, the layer mapping units 103, the precoding units 104, the multi-user precoding units 105, the frequency mapping units 106, the IFFT units 107, the GI insertion units 108, and the radio transmission units 109 is a transmission processing unit, and accomplishes a function of multiplexing and transmitting data signals addressed to a plurality of reception stations by using a radio resource which overlaps at least a part of radio resources used by the plurality of reception stations.

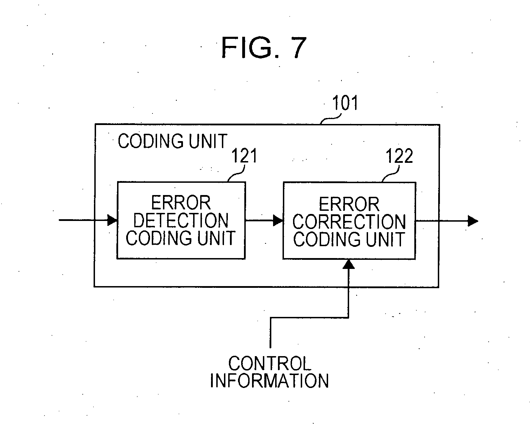

The coding unit 101 is configured as a schematic diagram of Fig. 7. The coding unit 101 is configured to include an error detection coding unit 121 and an error correction coding unit 122. The error detection coding unit 121 adds check bits to a data signal, which is a data signal input from an upper layer, by using an error detection coding method. The error detection coding method is, for example, cyclic redundancy check (CRC) coding or the like. The data signal to which the check bits are added is divided by each code block which is a coding bit unit, and is subjected to error correction coding by the error correction coding unit 122. A coding bit sequence is generated by using an error correction coding method corresponding to control information (radio control information) determined by the control information determining unit 111. The error correction coding method is, for example, turbo coding, low density parity check (LDPC) coding, or the like. The coding unit 101 performs puncturing on the coding bit sequence generated on the basis of input coding rate information.

Accordingly, the coding unit 101 removes a portion of the generated coding bit sequence (for example, check bits) to generate the coding bit sequence corresponding to the coding rate indicated by the input coding rate information. The coding unit 101 outputs the coding bits generated by performing puncturing to the modulating unit 102.

Here, in this embodiment, the coding method used by the coding unit 101 is determined on the basis of the control information. However, the control information may be received by the control information determining unit 111 from the outside to be stored therein, or a pre-set coding method may be set in the transmission station device and the reception station device.

The control information determining unit 111 outputs control information for instructions of the subsequent processes, and the control information may also be received from the outside or may be set in advance.

The modulating unit 102 performs modulation on the coding bit sequence input from the coding unit 101 by using a modulation method according to the control information corresponding to a channel state of the reception station to generate a modulation symbol sequence. The modulating unit 102 outputs the generated modulation symbol sequence to the layer mapping unit 103.

The modulation method performed by the modulating unit 102 is, for example, binary phase shift keying (BPSK), quadrature phase shift keying (QPSK), 16-ary quadrature amplitude modulation (16QAM), 64-ary quadrature amplitude modulation (64QAM), or the like.

The layer mapping unit 103 rearranges the symbol sequence input from the modulating unit 102 into a symbol sequence for each layer of each reception station on the basis of transmission rank information according to the control information. The layer is a unit for transmitting a data signal. Here, the number of rearranged layers is the number of layers indicated by the transmission rank information. The layer mapping unit 103 outputs the rearranged symbol sequence to the precoding unit 104.

The precoding unit 104 receives the symbol sequence for each layer from the layer mapping unit 103, and forms a vector having the symbols of each layer as components. The precoding unit 104 forms a vector having the same number of components as that of transmit antennas allocated to the reception station by multiplying the formed vector by the precoding matrix corresponding to the channel state, generates a symbol sequence constituted by the symbol of each component included in the formed vector, and outputs the generated symbol sequence to the multi-user precoding unit 105 corresponding to each transmit antenna 110. The precoding matrix corresponds to the multi-user precoding matrix and is determined by the control information determining unit 111.

The multi-user precoding unit 105 forms a vector having the signal of each reception station which is a frequency domain signal input from the precoding unit 104 addressed to each reception station as a component. A vector having the same number of components as that of transmit antennas provided in the transmission station is formed by multiplying the formed vector by the precoding matrix corresponding to the channel state so that the signals of the reception stations are spatially orthogonal to each other. The precoding matrix is determined by the control information determining unit 111. The symbol sequence constituted by the symbol of each component included in the formed vector is generated, and the generated symbol sequence is output to the frequency mapping unit 106 corresponding to each transmit antenna.

The frequency mapping unit 106 allocates the symbol included in the symbol sequence input from the multi-user precoding unit 105 on the basis of band allocation information according to the control information to generate the frequency domain signal. The frequency mapping unit 106 outputs the generated frequency domain signal to the IFFT unit 107.

The IFFT unit 107 performs inverse fast Fourier transform (IFFT) on the superposition coding signal input to each block from the frequency mapping unit 106 to be converted into a time domain signal. The IFFT unit 107 outputs the converted time domain signal to the GI insertion unit 108.

The GI insertion unit 108 inserts a cyclic prefix (CP) into the multiplexing signal input to each block from the IFFT unit 107 as a guard interval (GI) to generate an output signal. The CP inserted into the multiplexing signal by the GI insertion unit 108 is, for example, a signal of a predetermined part among the multiplexing signals input immediately beforehand. The GI insertion unit 108 outputs the generated output signal to the radio transmission unit 109.

The radio transmission unit 109 converts the output signal input from the GI insertion unit 108 and the control information into an analog signal through digital to analog (D/A) conversion. The converted analog signal is up-converted to a radio frequency band to generate a radio frequency band signal, and the generated radio frequency band signal is amplified to be output to the antenna 110.

The antenna 110 transmits the input radio frequency band signal modulated with a carrier such as a radio wave to the reception station device.

A radio frequency (RF) section constituted by the radio transmission unit 109 and the antenna 110 may be provided as a remote radio head (RRH) at a different place separately from a baseband section constituted by a section from the coding units 101 to the GI insertion units 108. At this time, the RF section is connected to the baseband section by a cable.

Here, while the transmission station device having a data processing configuration with two streams per reception station has been described, this embodiment is not limited thereto, and the number of streams may be two or more as long as a correspondence between the number of transmission streams and the number of antennas is satisfied.

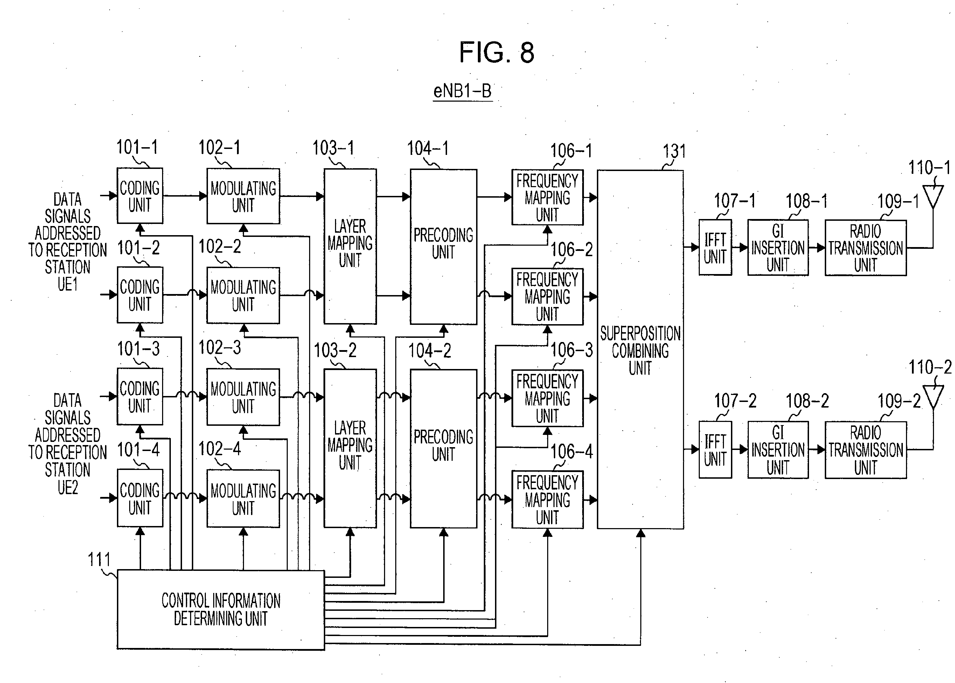

Fig. 8 is a schematic diagram illustrating the configuration of the transmission station device which performs transmission in the non-orthogonal multiplexing method according to this embodiment.

The configuration of a transmission station device eNB 1-B is the same as that of the transmission station device eBN1-A in the partial spatial orthogonal multiplexing method of Fig. 6. However, as the difference therebetween, the multi-user precoding unit 105 is changed to a superposition combining unit 131, and the superposition combining unit 131 is disposed between the frequency mapping units 106 and the IFFT units 107.

The superposition combining unit 131 receives the frequency domain signal from the frequency mapping unit 106 and combines the same frequency domain signal between the reception stations with a power difference according to power allocation information input from the control information determining unit 111 into a superposition coding signal. The power difference between the reception stations is, for example, determined by the channel states of the reception stations. The superposition coding signal combined between the reception stations is output to the IFFT unit 107 corresponding to each transmit antenna. The superposition combining unit 131 is also called a power control unit.

The transmission station device has any of the configuration of the eNB1-A of Fig. 6 and the configuration eNB1-B of Fig. 8, and may also have both the configurations.

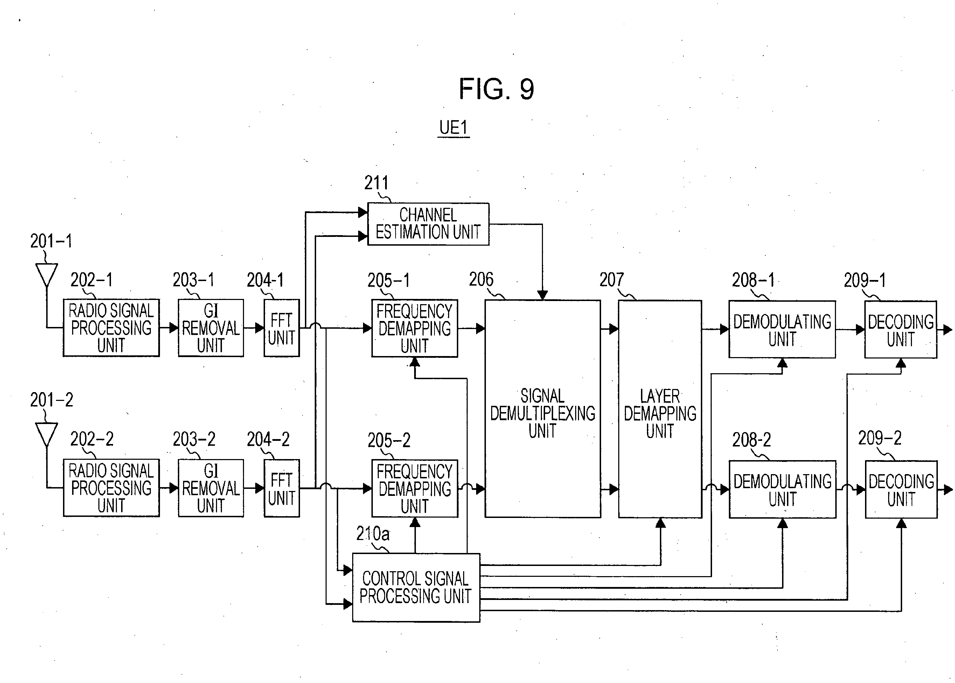

Next, the configuration of the reception station device according to this embodiment will be described. The reception station device according to this embodiment has a reception station configuration corresponding to both the transmission station devices in the partial spatial orthogonal multiplexing method and the non-orthogonal multiplexing method described above. Fig. 9 is a schematic diagram illustrating the device configuration of the reception station UE1 according to this embodiment.

The reception station device UE1 includes antennas 201 (201-1 and 201-2), radio signal processing units 202 (202-1 and 202-2), GI removal units 203 (203-1 and 203-2), FFT units 204 (204-1 and 204-2), frequency demapping units 205 (205-1 and 205-2), a signal demultiplexing unit 206, a layer demapping unit 207, demodulating units 208 (208-1 and 208-2), decoding units 209 (209-1 and 209-2), a control signal processing unit 210a, and a channel estimation unit 211.

The antenna 201 receives the radio frequency band signal transmitted from the transmission station and outputs the received radio frequency band signal to the radio signal processing unit 202.

The radio signal processing unit 202 down-converts the radio frequency band signal input from the antenna 201 into a baseband frequency band to generate an analog signal. The radio signal processing unit 202 performs analog to digital (A/D) conversion on the generated analog signal to be converted into a digital signal. The radio signal processing unit 202 outputs the converted digital signal to the GI removal unit 203.

The GI removal unit 203 removes the CP from the digital signal input from the radio signal processing unit 202 to obtain a multiplexing signal. The data signal demultiplexed by the GI removal unit 203 is output to the FFT unit 204.

The FFT unit 204 performs fast Fourier transform (FFT) on the data signal input from the GI removal unit 203 to obtain a data signal in the frequency domain. The FFT unit 204 outputs the obtained frequency domain signal to the frequency demapping unit 205.

The frequency demapping unit 205 extracts a symbol sequence in the domain indicated by the band allocation information input from the control signal processing unit 210a from the frequency domain signal input from the FFT unit 204. The frequency demapping unit 205 outputs the extracted symbol sequence to the signal demultiplexing unit 206.

The signal demultiplexing unit 206 performs a spatial demultiplexing process on the vector having the symbol included in each symbol sequence input from the frequency demapping unit 205 as a component to form the symbol sequence for each layer, and outputs the formed symbol sequence to the layer demapping unit 207. Examples of the spatial demultiplexing process include minimum mean square error (MMSE) detection, vertical-bell laboratories layered space-time architecture (V-BLAST) detection, and minimum likelihood (ML) detection. In the spatial demultiplexing process, detection is performed on the basis of channel performance of each channel input from the channel estimation unit 211.

The layer demapping unit 207 rearranges the symbol sequence for each layer input from the signal demultiplexing unit 206 into a symbol sequence for each code word which is a coding unit, on the basis of the transmission rank information rank indicator (RI) input from the control signal processing unit 210a. Therefore, the rearrangement performed by the layer demapping unit 207 is the inverse process of the rearrangement performed by the layer mapping unit 103. The layer demapping unit 207 outputs the rearranged symbol sequence to the demodulating unit 208.

The demodulating unit 208 performs demodulation on the symbol sequence input from the layer demapping unit 207 by using a demodulation method corresponding to modulation method information input from a control information acquisition unit 210 to generate a coding bit sequence. The demodulating unit 208 outputs the generated coding bit sequence to the decoding unit 209. In addition, the coding bit sequence is sent as any of a hard determination value and a soft determination value according to a decoding method.

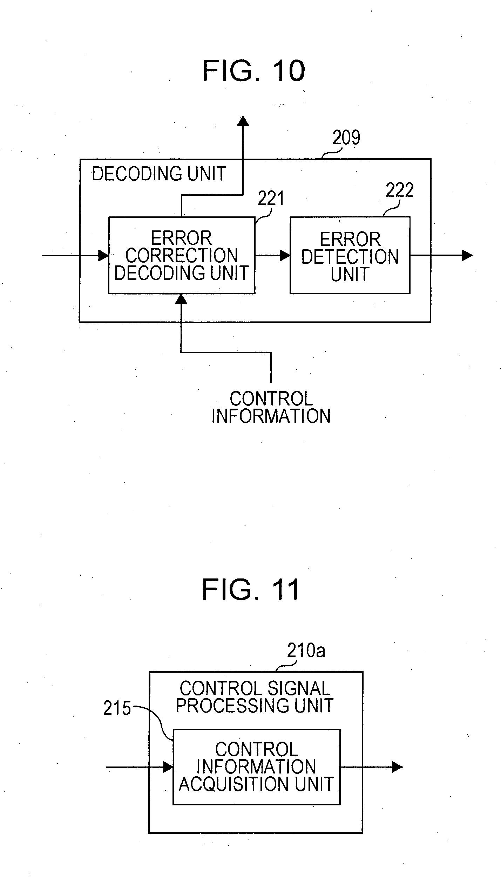

The decoding unit 209 is configured as a schematic diagram illustrated in Fig. 10. The decoding unit 209 is configured to include an error correction decoding unit 221 and an error detection unit 222. The error correction decoding unit 221 performs error correction decoding corresponding to coding rate information input from the control signal processing unit 210a on the coding bit sequence input from the demodulating unit 208 to obtain a data signal. The error detection unit 222 performs, for example, cyclic redundancy check (CRC) on the data bits constituting the data signal obtained by the error correction decoding unit 221 to check the presence or absence of an error. The decoding unit 209 determines ACK in a case where no error is detected and determines NACK in a case where an error is detected, as transmission check information. The error detection unit 222 outputs the data signal obtained in the case where no error is detected, to the outside.

The control signal processing unit 210a is a control information acquisition unit 215 which acquires control information addressed to the reception station and control information addressed to the other reception station which is multiplexed, from the frequency domain signal input from the FFT unit 204 as illustrated in Fig. 11.

The channel estimation unit 211 obtains channel estimation information associated with the channel performance of each channel from the frequency domain signal input from the FFT unit 204.

Next, the configuration example of the device of the reception station UE2 which is non-orthogonally multiplexed with the device of the reception station UE1 will be described. The device of the reception station UE2 is configured on the premise that a successive interference cancellation (SIC) circuit is mounted therein. The configuration of the device of the reception station UE2 may be used for the device of the reception station UE 1.

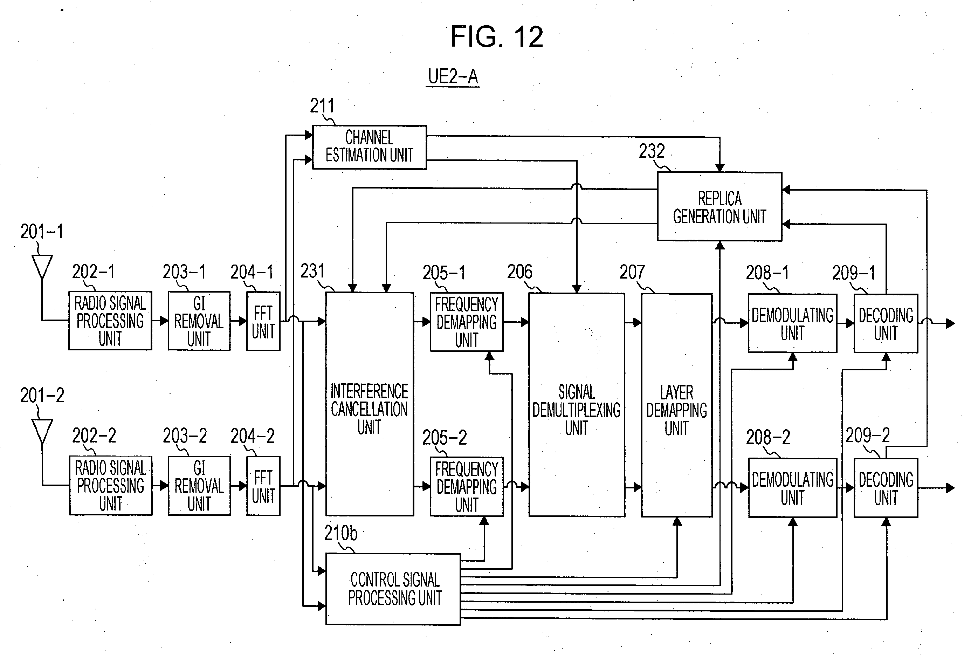

Fig. 12 is a schematic diagram illustrating the device configuration of the device of the reception station UE2-A according to this embodiment.

The configuration of the device of the reception station UE2-A illustrated in Fig. 12 is a configuration provided with an interference cancellation unit 231 and a replica generation unit 232 in the configuration example of the device of the reception station UE1 illustrated in Fig. 9. This embodiment is based on the premise that the interference cancellation unit 231 is disposed between the FFT units 204 and the frequency demapping units 205, but the configuration in a frequency mapping method is not limited thereto. For example, when a frequency resource between the multiplexed reception stations is in the same band as illustrated in Fig. 2, the interference cancellation unit 231 may be disposed between the frequency demapping units 205 and the signal demultiplexing unit 206.

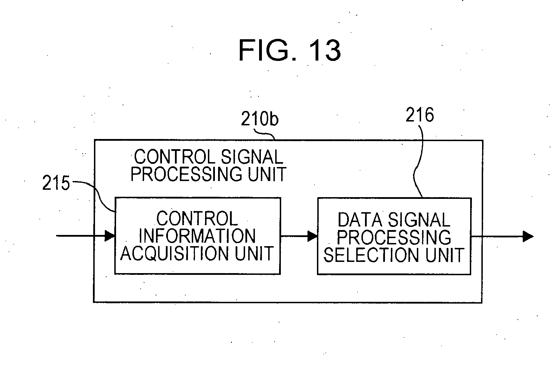

In addition, as illustrated in Fig. 13, a control signal processing unit 210b includes the control information acquisition unit 215 of the control signal processing unit 210a of the device of the reception station UE1 and a data signal processing selection unit 216 which selects a data signal process of each unit. The data signal processing selection unit 216 selects any of the process of a desired data signal addressed to the reception station and the process of an interference data signal of the other reception station, and outputs the control information for performing the process to each unit.

Here, the data signal processing selection unit 216 performs selection by using selection information acquired from the radio control information acquired by the control information processing unit 215. However, this embodiment is not limited thereto. For example, a case where the selection of the data signal process is performed on the basis of the result of maximum-likelihood estimation of the error detection result of the reception data signal output from the decoding unit 209 is postulated.

The replica generation unit 232 returns the interference data signal input from the decoding unit 209 to the symbol sequence which is generated by the transmission station before the frequency demapping process. The generated replica symbol sequence is output to the interference cancellation unit 231. A symbol sequence at zero power is output as an initial value.

The interference cancellation unit 231 subtracts a replica frequency domain signal input from the replica generation unit 232 from the frequency domain signal input from the FFT unit 204 to remove the signal of an undesirable reception station. The symbol sequence as the subtraction result is output to the signal demultiplexing unit 206. In an initial process, the process in the interference cancellation unit 231 is skipped, or performs subtraction using the symbol sequence at zero power.

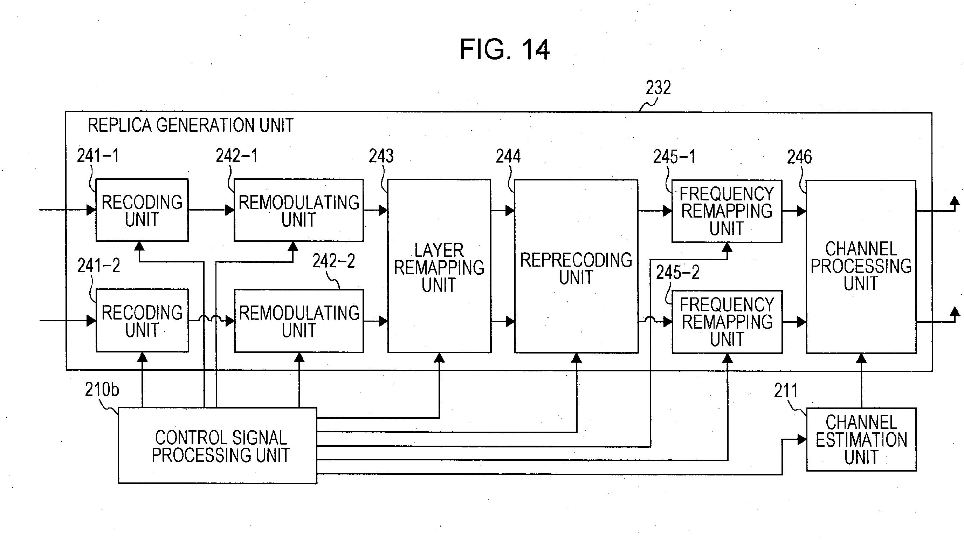

Fig. 14 is a schematic diagram illustrating the process in the replica generation unit. The replica generation unit 232 is configured to include recoding units 241 (241-1 and 241-2), remodulating units 242 (242-1 and 242-2), a layer remapping unit 243, a reprecoding unit 244, frequency remapping units 245 (245-1 and 245-2), and a channel processing unit 246.

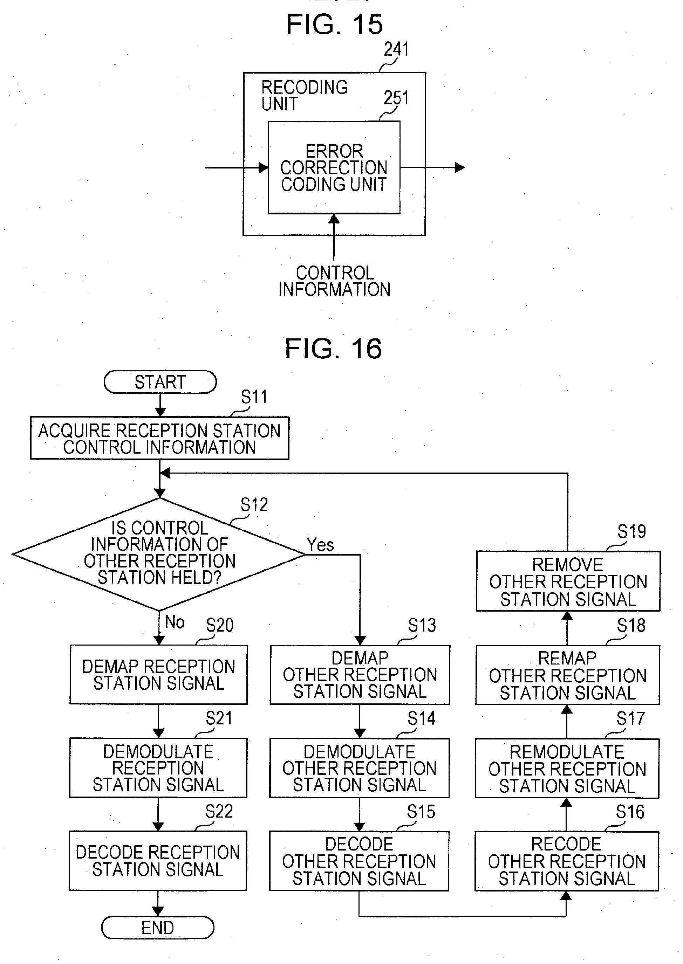

The recoding unit 241 is configured to include an error correction coding unit 251 as illustrated in Fig. 15. The error correction coding unit 251 of Fig. 15 is similar to the error correction coding unit 122 of Fig. 7. The data signal input from the decoding unit 209 is input to the error correction coding unit 251, and error correction coding corresponding to the coding rate information input from the control information acquisition unit 210 is performed thereon to generate a replica coding bit sequence. The recoding unit 241 uses the same error correction coding method as that on the transmission side.

The remodulating unit 242 performs the same modulation as that on the transmission side on the coding bit sequence input from the recoding unit 241 by using a modulation method corresponding to the modulation method information input from the control signal processing unit 210b to generate a replica modulation symbol sequence.

The layer remapping unit 243 restores the modulation symbol sequence input from the remodulating unit 242 to the replica symbol sequence for each layer on the basis of the transmission rank information RI input from the control signal processing unit 210b.

The reprecoding unit 244 performs multiplication on the symbol sequence for each layer input from the layer remapping unit 243 by using a precoding matrix corresponding to a precoding information precoding matrix indicator (PMI) input from the control signal processing unit 210b to generate a replica symbol sequence for each transmit antenna. The reprecoding unit 244 outputs the replica symbol sequence to the frequency remapping unit 245.

The frequency remapping unit 245 allocates the replica symbol sequence for each transmit antenna input from the reprecoding unit 244 on the basis of frequency mapping information input from the control signal processing unit 210b to generate the replica frequency domain signal.

The channel processing unit 246 multiplies the replica symbol sequence for each transmit antenna input from the frequency remapping unit 245 by a frequency map input from the channel estimation unit 211 on the basis of the channel estimation information corresponding to the transmit/receive antennas to generate the received replica frequency domain signal.

The configuration example of the device of the reception station UE1 illustrated in Fig. 9 or the configuration example of the device of the reception station UE2-A illustrated in Fig. 12 is based on the premise that the data transmitted by the transmission station device illustrated in Fig. 6 or 8 is received, but this embodiment is not limited thereto.

Fig. 16 is a flowchart illustrating a process of acquiring a data signal by the reception station UE2-A in this embodiment.

First, by the control information acquisition unit 215 of the control signal processing unit 210b, the control information addressed to the reception station and the control information addressed to the other multiplexed reception station are acquired from the frequency domain signal input from the FFT unit 204 (Step S 11). The control information configuration for simultaneously acquiring the control information addressed to the reception station and the control information addressed to the other multiplexed reception station will be described later. In a case where the control information to the other multiplexed reception station is acquired and held (Yes in Step S12), the data signal processing selection unit 216 of the control signal processing unit 210b selects performing of the process of the interference data signal, and sends information needed for the reception process to each processing unit. The reception station UE2-A performs demapping (Step S 13), demodulation (Step S14), and decoding (Step S 15) on the reception data signal by using the control information of the other reception station. In addition, recoding (Step S16), remodulation (Step S17), and remapping (Step S18) are performed by the replica generation unit 232 on the decoded data signal addressed to the other reception station by using the control information of the other reception station to generate the reception signal replica of the data signal addressed to the other reception station, and the reception data signal addressed to the other reception station is removed from the reception data signal by the interference cancellation unit 231 (Step S 19). In a case where the processes performed on the acquired radio control information addressed to all the other reception stations are ended (No in Step S12), the data signal processing selection unit 216 of the control signal processing unit 210b selects the process of the desired data signal and performs demapping (Step S20), demodulation (Step S21), and decoding (Step S22) on the reception data signal by using the control information of the reception station to acquire the desired data signal addressed to the reception station.

### «Process Order of Data Signal»

In the non-orthogonal multiplexing method, there is a problem in that decoding cannot be normally performed when an error occurs in the process order of the data signal. For example, in Fig. 3, when demodulation and decoding are performed on the data signal addressed to the reception station UE21 before the data signal addressed to the reception station UE11 is removed, many bit errors occur due to the effect of the data signal addressed to the reception station UE11. Here, the information on the multiplexing layer is needed. By notifying the information on the multiplexing layer, the reception station perceives the relationship between the non-orthogonal multiplexing allocation radio resource and the other reception station, and interference can be removed in a correct reception process order.

As the information on the multiplexing layer, there are an absolute number and a relative number. The absolute number is, for example, a layer number as in Figs. 3 and 4. In a case where the absolute number of the multiplexing layer is notified, the data signal process is performed sequentially from the data signal addressed to the reception station allocated to the first layer. The relative number is the number difference between the multiplexing layer allocated to the reception station and the multiplexing layer of the other reception station which performs communication by using the same radio resource as that of the reception station. In a case where the relative number of the multiplexing layer is notified, the data signal process is performed sequentially from the data signal addressed to the reception station having the largest relative number.

### <<Configuration of Radio Control Information>>

In the non-orthogonal multiple access method, demodulation or decoding of the symbol addressed to the other reception station is performed during the interference cancellation process, and thus the radio control information addressed to the other reception station needs to be notified. Hereinafter, two examples of the control information configuration of the reception station including the radio control information of the other multiplexed reception station will be described.

Although the description of the configuration of the control information of this embodiment is the description of the configuration in a case where the two reception stations are multiplexed, the configuration of the control information of this embodiment is not limited thereto, and the number of reception stations may be 3 or greater.

### [1. Package Type]

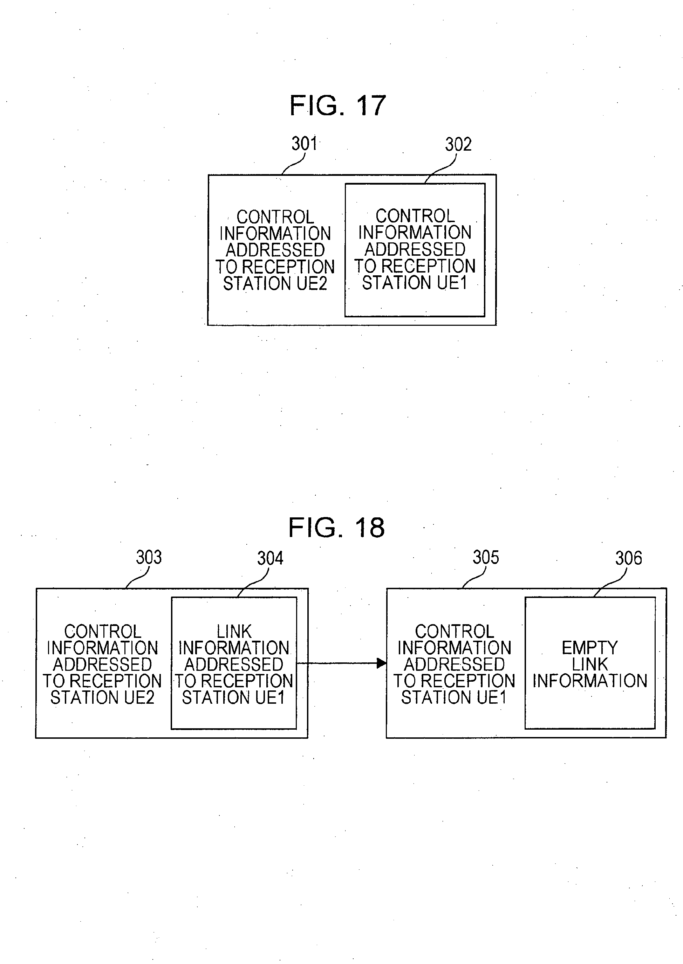

Fig. 17 is an example of a package type radio control information configuration acquired by the reception station UE2. Radio control information 301 addressed to the reception station UE2 has a configuration that packages radio control information 302 addressed to the reception station UE1 and is coded by using the unique information of the reception station UE2. The reception station UE2 performs decoding by using the unique information of the reception station UE1 possessed in advance to acquire the radio control information 301 addressed to the reception station UE2. The reception station UE2 can simultaneously acquire the radio control information 301 addressed to the reception station UE2 and the packaged radio control information 302 addressed to the reception station UE1.

The radio control information 302 addressed to the reception station UE1 is configured independently from the radio control information 301 addressed to the reception station UE2, and is coded by using the unique information of the reception station UE1. The reception station UE1 performs decoding by using the unique information of the reception station UE1 possessed in advance to acquire only the radio control information 302 addressed to the reception station UE1.

The configuration in which a single piece of radio control information includes a single piece of radio control information addressed to the other reception station is described. However, the radio control information is not limited thereto, and in a case where two or more reception stations are allocated to the lower layers as in the multiplexing resource arrangement as illustrated in Figs. 3 and 4, a configuration is employed in which a single piece of radio control information packages two or more pieces of control information addressed to the other reception stations.

In addition, in the radio control information configuration method, the information on the order of performing the non-orthogonal multiplexing reception process needs to be packaged. The information on the order includes, for example, the absolute number of the multiplexing layer to which the multiplexed reception station is allocated, the relative number of the multiplexing layer with respect to the multiplexing layer of the reception station, and the like. The radio resources and the resource map information on the multiplexing layer as illustrated in Figs. 3 and 4 are configured by using the number of the multiplexing layer and the resource map information, and the reception station performs the interference cancellation process and the reception process by using this information.

### [2. Connection Type]

Fig. 18 illustrates an example of a connection type control information configuration acquired by the reception station UE2.

The control information addressed to each reception station is configured so that a field that specifies link information which is the reference for the control information of the other reception station is present therein.

Each piece of radio control information is coded to be uniquely acquired by the corresponding reception station. For example, control information 303 addressed to the reception station UE2 is scrambled by using the unique information of the reception station UE2. The reception station UE2 can uniquely acquire the control information 303 addressed to the reception station UE2 by using the unique information of the reception station UE2 possessed in advance. However, the reception station UE2 does not possess the unique information of the reception station UE1, and thus cannot acquire the control information addressed to the reception station UE1. In the radio control information configuration, only link information 304 sent to the reception station UE1 is packaged in the control information 303 addressed to the reception station UE2. The link information 304 sent to the reception station UE1 includes, for example, the unique information of the reception station UE1, resource map address information in which the radio control information addressed to the reception station UE1 is present, and the like. By the acquired link information, the reception station UE2 can search for the address in which the control information addressed to the reception station UE1 is present. The reception station UE2 performs searching by using the acquired link information to acquire radio control information 305 addressed to the reception station UE1.

On the other hand, the radio control information 305 addressed to the reception station UE1 is configured so that empty information 306 is set in the field that specifies the link information or the field that specifies the link information is not present therein, since the reception station is not allocated to the lower layer.

The configuration in which a single piece of link information is included in a single piece of radio control information is described. However, the radio control information configuration is not limited thereto, and in a case where two or more reception stations are allocated to the lower layer as in the multiplexing resource arrangement as illustrated in Figs. 3 and 4, two or more pieces of link information are packaged in the single piece of radio control information.

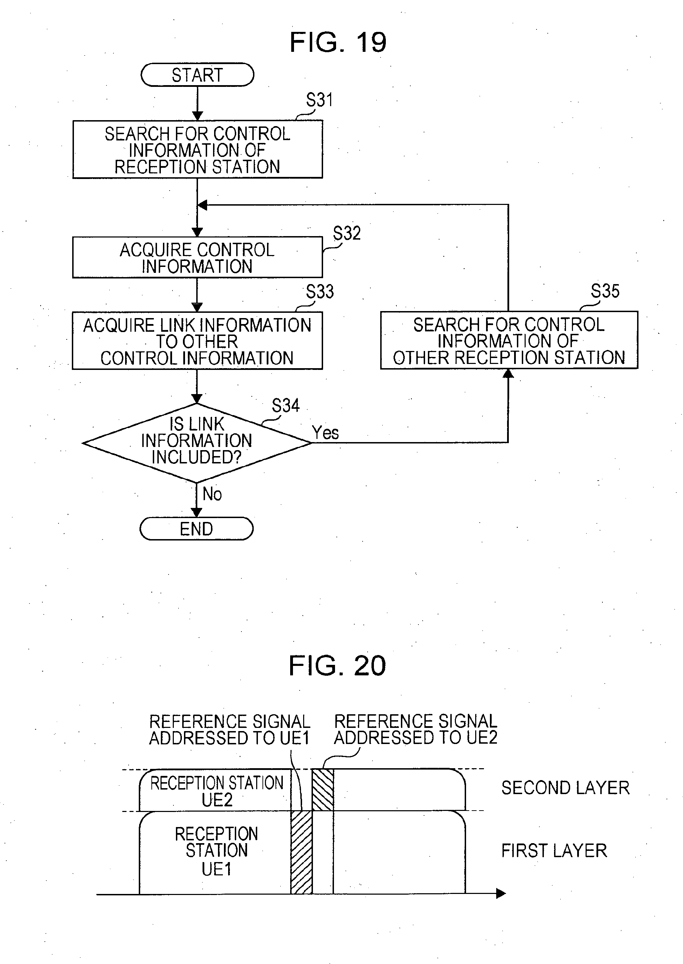

Fig. 19 is a flowchart of a radio control information acquisition process performed by the radio control information configuration. This is a radio control information acquisition process performed by the control information acquisition unit 215 of the control signal processing unit 210b according to the connection type control information configuration of Fig. 18.

First, the reception station searches for the address in which the radio control information addressed to the reception station is present by using the unique information of the reception station (Step S31), and acquires the radio control information addressed to the reception station (Step S32). Subsequently, the link information for access to the radio control information addressed to the other reception station packaged in the radio control information addressed to the reception station is acquired (Step S33). In a case where the link information can be acquired (Yes in Step S34), by using the acquired link information to the radio control information addressed to the other reception station, the reception station searches for the address in which the radio control information addressed to the other reception station is present (Step S35), and acquires the radio control information addressed to the other reception station (Step S32). In a case where the link information cannot be acquired (No in Step S34), the link is stopped, and the reception station ends the control information acquisition process. This process is repeated until all the links are stopped to search for and acquire the radio control information.

In the package type radio control information configuration method, the information on the order needs to be packaged and explicitly notified to the reception station. However, in this radio control information configuration, the information on the order is implicitly notified so that the link information or the number of links functions as the relative number of the multiplexing layer. The information on the order does not need to be packaged.

### <<Monitoring>>

In the non-orthogonal multiplexing method, the radio resource that includes the signal addressed to the non-orthogonally multiplexed reception station is also received in addition to the radio resource that includes the signal addressed to the reception station, and the data signal needs to be held. Therefore, a method of generating the resource map information monitored by the reception station from the radio control information addressed to the other reception station subjected to the reception process in advance will be described.

For example, the resource map information which is necessary for motoring when the reception station UE31 in Fig. 4 performs the reception process will be described. In the orthogonal multiplexing method, in order to decode the signal addressed to the reception station UE31, only a resource map ResourceMap₃^{UE3I}={1} to which the data signal addressed to the reception station UE31 is allocated may be monitored. However, in the non-orthogonal multiplexing method, the interference cancellation needs to be performed on the signal addressed to the reception station UE1 and the signal addressed to the reception station UE21 until the signal addressed to the reception station UE31 is decoded. In order to decode the signal addressed to the reception station UE1 and the signal addressed to the reception station UE21, resource maps ResourceMap₁^{UE1}={1, 2, 3, 4} and ResourceMap₂^{UE21}={1, 2} to which the data signals addressed to the reception station UE1 and the reception station UE21 are allocated need to be monitored. That is, at least ResourceMap₁=ResourceMap₁^{UE1}={1, 2, 3, 4} needs to be monitored during the process of the data signal addressed to the reception station in the first layer and ResourceMap₂=ResourceMap₂U^{E21}={1, 2} need to be monitored during the process of the data signal addressed to the reception station in the second layer.

Subsequently, for example, resource map information needed for monitoring of whether a single reception station (hereinafter, called a reception station UE34) is allocated to the resource to which the reception stations UE32 and UE33 are allocation in Fig. 4 when the reception process is performed will be described. The resource map to which the data signal addressed to the reception station UE34 is allocated is ResourceMap₃^{UE34}={2, 3}. In the non-orthogonal multiplexing method, the interference cancellation needs to be performed on the data signals addressed to the reception stations that use the radio resources {2, 3} in the first and second layers, and thus the resource maps ResourceMap₁^{UE1}={1, 2, 3, 4}, ResourceMap₂^{UE21}={1, 2}, and ResourceMap₂^{UE22}={3, 4} to which the data signals addressed to the reception station UE1, the reception station UE21, and the reception station UE22 are allocated also need to be monitored. That is, at least ResourceMap₁=∪ResourceMap₁^{UE1}={1, 2, 3, 4} needs to be monitored during the process of the data signal addressed to the reception station in the first layer and ResourceMap₂=ResourceMap₂^{UE21}∪ResourceMap₂^{UE22}={1, 2, 3, 4} needs to be monitored during the process of the data signals addressed to the reception stations in the second layer.

### «Reference Signal»

In the non-orthogonal multiplexing method, performance significantly depends on the transmission power of the data signal. Here, a method of notifying power to the reception station by the reference signal will be described.

Fig. 20 is a schematic diagram of resources to power in the reference signal. To the reference signals of the reception station UE 1 and the reception station UE2, different orthogonal radio resources are allocated, and the reference signals are transmitted at the same power as the transmission power allocated to each reception station. Each reference signal is transmitted by using the orthogonal resources, and thus the reference signals can be received without interference between the reference signals. The reception station estimates the channel and the power by receiving the corresponding reference signal.

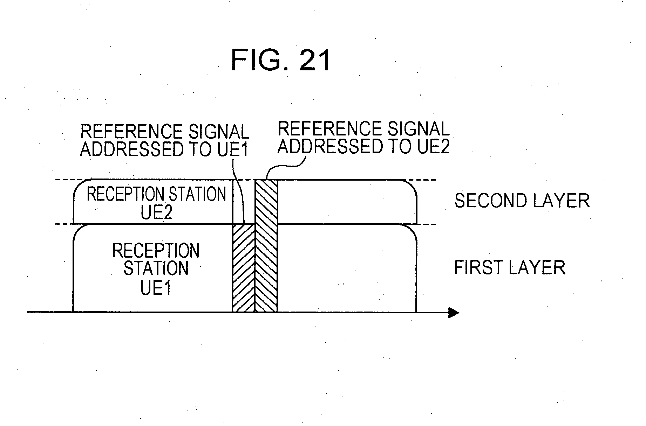

Fig. 21 is another schematic diagram of resources to power in the reference signal. As the difference from Fig. 20, the transmission power of the reference signal addressed to the reception station UE1 is added to the transmission power of the reference signal addressed to the reception station UE2 during the transmission. Accordingly, by obtaining the power gain of the transmission power of the reception station UE1, the estimation accuracy of the reception station UE2 is increased. The estimation of the channel or the power of the reception station UE2 can be calculated by first calculating the transmission power of the reception station UE1 from the reference signal addressed to the reception station UE1 and subtracting the power addressed to the reception station UE 1 from the reference signal addressed to the reception station UE2.

The reference signal is described in a case where the number of reception stations is two. However, this embodiment is not limited thereto, the reference signal is similarly set even in a case where the number of reception stations is three or more.

### «Notification of Transmission Power by Radio Control Information»

Hereinabove, the method of notifying the transmission power by using the reference signal has been described. However, in a method of sharing the reference signals using the same radio resource, the transmission power cannot be notified by the reference signal, and thus the notification of the transmission power by the radio control information will be described hereinafter.

One method is a method of explicitly notifying a value by carrying information quantized in a range of from 0 to the maximum acceptable transmission power as each allocation transmission power on the radio control information addressed to each multiplexed reception station for each unit radio resource. Since the range is fixed, the process on the transmission side and the reception side is easy.

Another method is a method of limiting a quantization range of the power information by using the transmission power of the data signal of the reception station allocated to the upper layer. The quantization range is limited by using characteristics in which the transmission power of the data signal of the reception station allocated to the upper layer is set to be lower than the transmission power of the data signal of the reception station allocated to the lower layer. Specifically, the transmission power of the data signal of the reception station in the first layer is quantized using the maximum acceptable transmission power as the maximum value. Next, the transmission power of the data signal of the reception station in the second layer is not postulated to be transmitted at a higher power than the transmission power of the data signal of the reception station in the first layer due to the performance of the non-orthogonal multiple access method and is thus quantized using the transmission power of the data signal of the reception station in the first layer as the maximum value. Quantization regarding the third or higher layer is also performed using the transmission power of the data signal of the reception station in the immediately lower layer as the maximum value to limit the quantization range. Accordingly, the number of notification bits can be reduced, or quantization accuracy can be increased.

In a case of the transmission in which the power is notified by using the reference signal, notification may not be performed using the radio control information.

Hereinabove, the transmission/reception stations configuration 1 in which interference is cancelled by decoding the interference signal in this embodiment has been described. Accordingly, communication in the non-orthogonal multiple access method is possible, and thus the spectrum efficiency is improved by a further increase in the number of multiplexed signals.

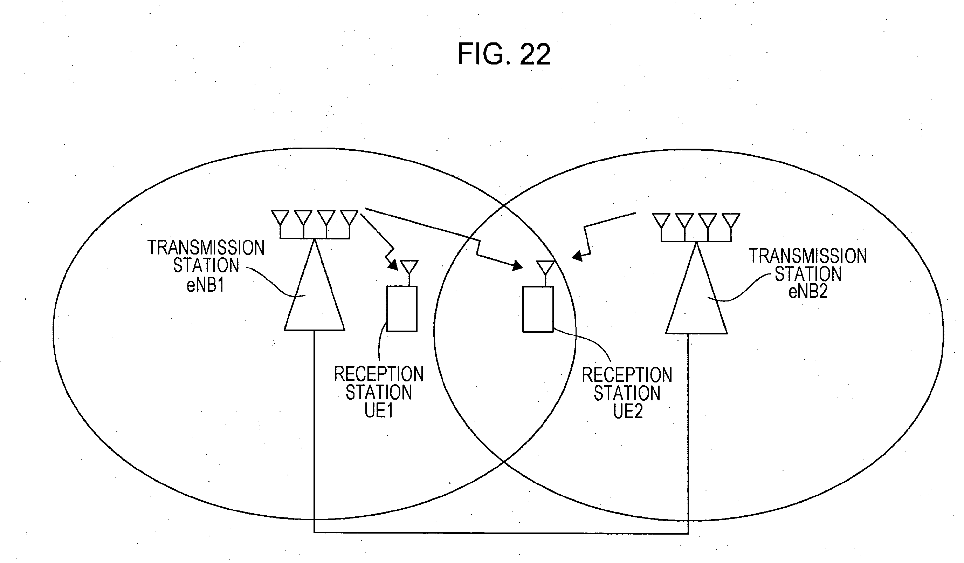

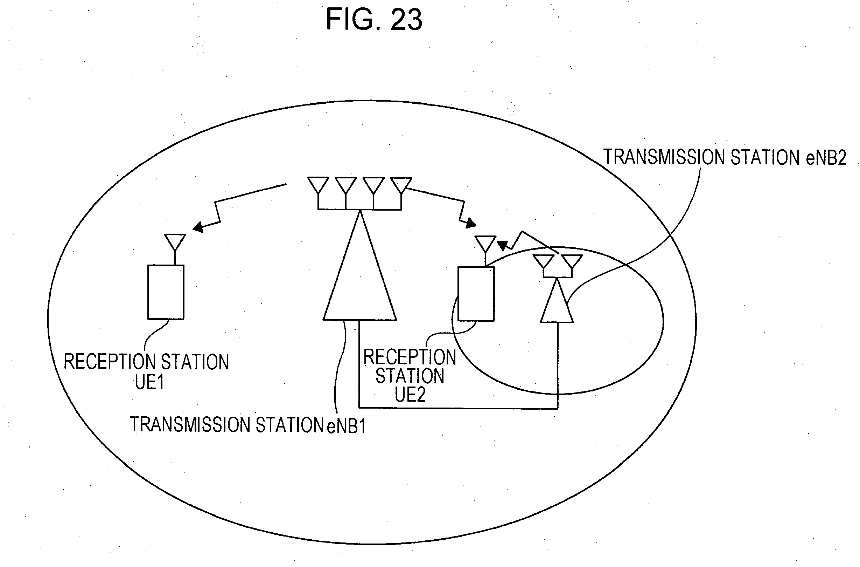

In addition, the configuration of the device of the reception station UE2 of this embodiment can also be applied to interference cancellation between cells. Fig. 22 is a conceptual diagram illustrating interference between macrocell base stations. In addition, Fig. 23 is a conceptual diagram illustrating interference between a picocell base station, a femtocell base station, and a macrocell base station. Figs. 22 and 23 are configured to include the transmission station eNB1-A, the transmission station eNB2-B, the reception station UE1, and the reception station UE2. The transmission station eNB1 has the same configuration as that of Figs. 6 and 8, the reception station UE1 has the same configuration as that of Fig. 9, and the reception station UE2 has the same configuration as that of Fig. 12. The transmission station eNB2 of Fig. 22 basically has the same configuration as that of the transmission station eNB1, but the transmission station eNB2 of Fig. 23 is set to have lower transmission power. The reception station UE1 of Figs. 22 and 23 is connected to the transmission station eNB1, and the reception station UE2 is connected to the transmission station eNB2. The reception station UE1 and the reception station UE2 use the same radio resource as in Fig. 2, and the reception station UE2 is disposed in the vicinity of the cell edge. Therefore, the reception station UE2 receives the signal addressed to the reception station UE1 from the transmission station eNB1 as strong interference between the neighboring cells. At this time, the reception station UE2 receives the radio control information addressed to the reception station UE1 from the transmission station eNB1 or the transmission station eNB2 and thus can remove the interference signal in the same process as that of the non-orthogonal multiple access method.

In a case where the radio control information addressed to the reception station UE1 is transmitted from the transmission station eNB2, the radio control information is transmitted in the same configuration as the above-described radio control information. At this time, the radio control information addressed to the reception station UE1 is sent from the transmission station eNB1 to the transmission station eNB2 via a backhaul line connected between the transmission stations. In a case where the radio control information addressed to the reception station UE1 is transmitted from the transmission station eNB1, the transmission is performed only in the connection type among the above-described radio control information configurations. At this time, with the radio resource to which the radio control information addressed to the reception station UE1 transmitted by the transmission station eNB1 is allocated, data transmission by the transmission station eNB2 is not performed in order to avoid the interference of the radio control information. In order to perform the above-described process, the radio resource map information to which the radio control information addressed to the reception station UE1 is allocated needs to be shared by the transmission station eNB1 and the transmission station eNB2.

In this manner, the radio control information addressed to the other cell reception station which is present in the other cell is acquired from the other transmission station included in the other cell, and by using the radio resource which overlaps at least a portion of the radio resource used by each of the plurality of reception stations, the radio control information is transmitted from the transmission station in cooperation with the transmission station in the other cell. The radio control information of the reception station in the cell and the radio control information addressed to the reception station in one or more other cells which are linked to the radio control information of the reception station in the cell are transmitted.

### (2) Transmission/Reception Configuration 2

Next, a transmission/reception stations configuration 2 for canceling interference without decoding the interference signal of this embodiment will be described.

The configuration of the transmission station device according to this transmission/reception stations configuration is the same as that of Figs. 6 and 8. Here, a replica generation unit and an interference cancellation unit in the configuration of the reception station UE2 are different from those of the transmission/reception stations configuration 1, and thus the replica generation unit and the interference cancellation unit will be described below.

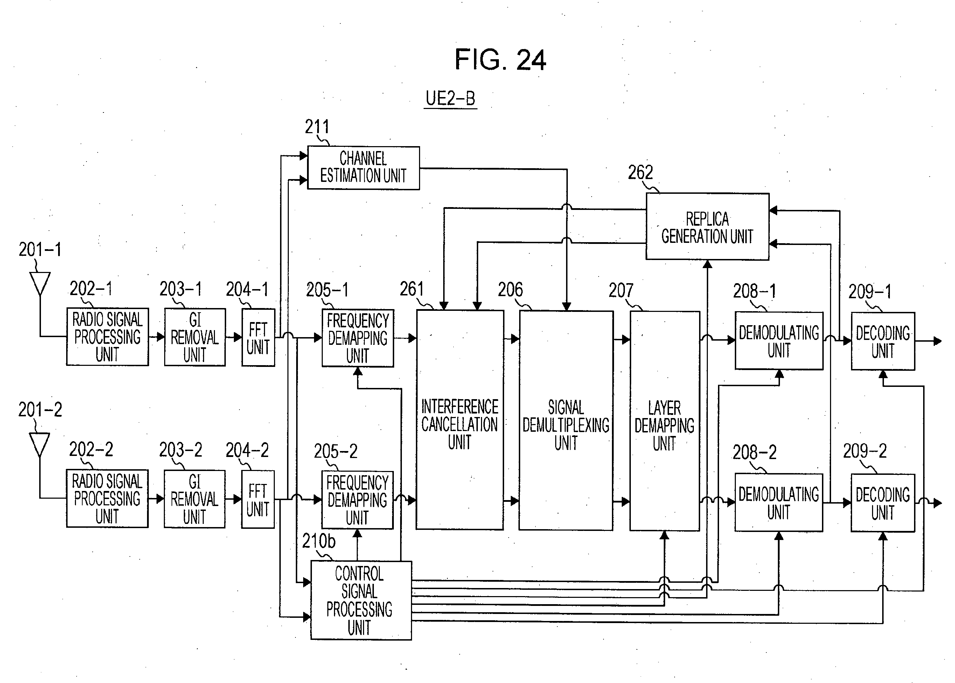

Fig. 24 is a schematic diagram of the configuration of the reception station device according to the transmission/reception stations configuration 2 of the first embodiment. In the configuration of the device of the reception station UE2-B of the transmission/reception stations configuration 1 of Fig. 11, the output bit sequence of the decoding unit 209 is input to the replica generation unit 232, and the output result of the replica generation unit 232 is input to the interference cancellation unit 231 which is inserted between the FFT units 204 and the frequency demapping units 205. On the other hand, in this transmission/reception stations configuration, as illustrated in Fig. 24, a replica generation unit 262 is connected to the demodulating units 208 instead of the decoding units 209, and an interference cancellation unit 261 is disposed between the frequency demapping units 205 and the signal demultiplexing unit 206. This is because decoding is not performed in the transmission/reception stations configuration 2. Therefore, interference cancellation in units of transport blocks is not needed. That is, without the influence of the radio resource mapping of the reception stations in the lower layers, interference cancellation can be performed by processing only the radio resource to which the desired data signal is allocated. The transmission/reception stations configuration 2 does not perform decoding, and thus the coding bit sequence subjected to the hard determination by the demodulating unit 208 is output and is input to the replica generation unit 262.

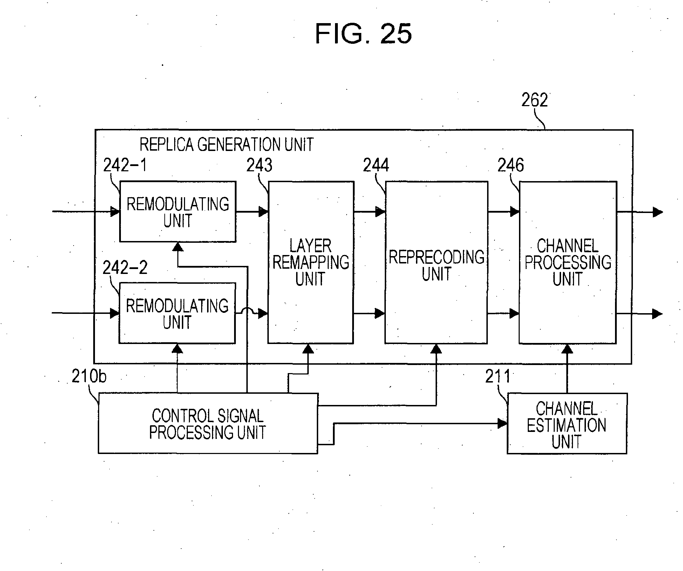

Fig. 25 is a block diagram of the configuration of the replica generation unit according to this embodiment. Compared to Fig. 14, the replica generation unit 262 also starts the process from the remodulation and is configured to exclude frequency remapping. Here, unlike the replica generation unit 232 of Fig. 14, a signal from the demodulating unit 208 is input, and thus the remodulating units 242 and the frequency remapping units 245 are unnecessary.

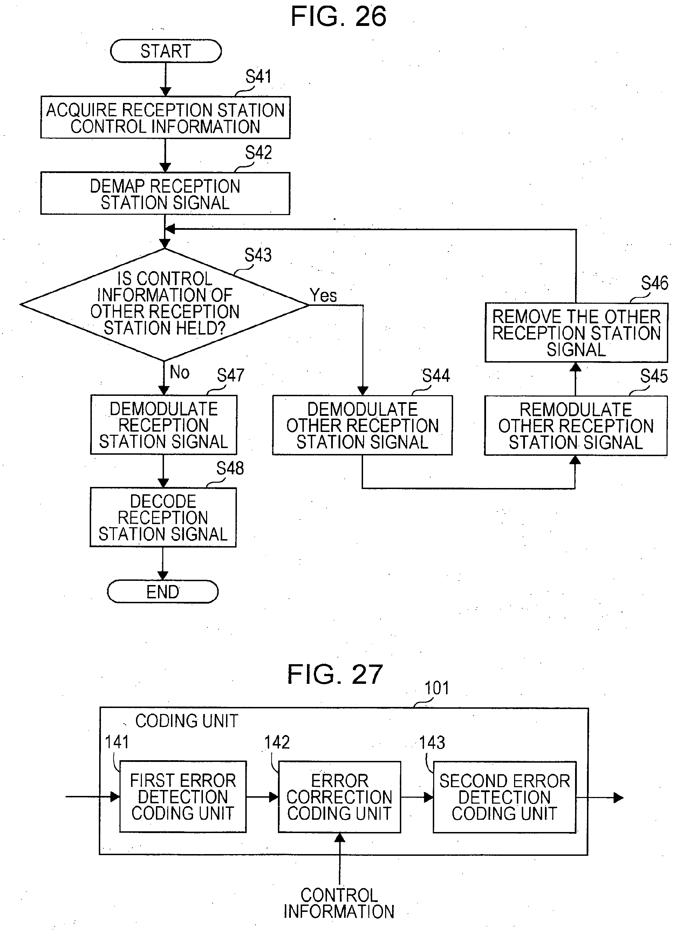

Fig. 26 is a flowchart illustrating a process of acquiring a desired data signal by the non-orthogonally multiplexed reception station in this embodiment. First, the control information addressed to the reception station and the control information addressed to the other multiplexed reception station are acquired by the control information acquisition unit 15 of the control signal processing unit 210b (Step S41). The control information for notifying the control information addressed to the reception station and the control information addressed to the other multiplexed reception station has the same configuration as that of the transmission/reception stations configuration 1 of this embodiment. The frequency and the layer in which the data signal addressed to the reception station is present are demapped by the frequency demapping unit 205 and the layer demapping unit 207 from the acquired control information addressed to the reception station (Step S42).

Next, in a case where the radio control information addressed to the other reception station is acquired simultaneously with the acquisition of the radio control information addressed to the reception station (Yes in Step S43), performing the process of the interference data signal is selected by the data signal processing selection unit 16 of the control signal processing unit 210b, and information needed for the transmission process is sent from the control information acquisition unit to each processing unit. Demodulation of the reception data signal is performed by the demodulating unit 208 (Step S44). The demodulated data signal addressed to the other reception station is not decoded but is subjected to a remodulation process by the remodulating unit 242 of the replica generation unit 262 by using the control information of the other reception station (Step S45). The process is sequentially performed by the replica generation unit 262 to generate a replica of the reception signal of the data signal addressed to the other reception station, and the data signal addressed to the other reception station is removed from the reception data signal by the interference cancellation unit 261 (Step S46). The process is ended by all the acquired radio control information addressed to the other reception station (No in Step S43), performing the process of the desired data signal is then selected by the data signal processing selection unit 16 of the control signal processing unit 210b, and demodulation (Step S47) and decoding (Step S48) are performed on the reception data signal by using the control information addressed to the reception station to acquire the desired data signal addressed to the reception station.

Hereinabove, the transmission/reception stations configuration 2 in which interference is cancelled by using the signal from the demodulating unit 208 without performing the error correction decoding process on the interference signal in this embodiment has been described. Accordingly; the interference cancellation can be more easily performed than the transmission/reception stations configuration 1.

### (3) Transmission/reception Stations Configuration 3

Last, a transmission/reception stations configuration 3 including both the transmission/reception stations configuration 1 and the transmission/reception stations configuration 2 of this embodiment will be described.

It is postulated that as the error correction method used in the coding unit of the transmission/reception stations configuration 1 of this embodiment, a method which has high error correction performance but also a large calculation amount such as turbo coding or LDPC coding is used. On the other hand, since the error correction decoding process is not performed on the interference cancellation signal in the transmission/reception stations configuration 2 of this embodiment, interference cancellation is performed by using a replica signal having an error. Therefore, the symbol error of the replica is channeled to a subsequent stage process, and as a result, bit errors in a desired signal are increased. The transmission/reception stations configuration 3 of this embodiment described below is a configuration which adaptively controls the transmission/reception stations configuration 1 that performs the error correction decoding process on the replica signal and the transmission/reception stations configuration 2 that does not perform the error correction decoding process, depending on the number of errors.

The basic configurations of the transmission station device and the reception station device according to the transmission/reception stations configuration 3 of this embodiment are the same as those of the transmission/reception stations configuration 1 of this embodiment. However, the process of the coding unit of the transmission station device and the processes of the decoding unit and the recoding unit in the replica generation unit of the reception station device are different from those of the transmission/reception stations configuration 1 of this embodiment. Therefore, hereinafter, the processes of the coding unit, the recoding unit, and the decoding unit will be described.

In this embodiment, an example in which the coding unit 101 of the transmission station device performs error detection coding in two stages will be described. Examples of the error detection coding method include parity coding, CRC coding, and the like. The reception station device adaptively changes the decoding process during the cancellation process by using the error detection result.

Fig. 27 is a configuration diagram of the coding unit of the transmission station device of this embodiment.

The coding unit 101 includes a first error detection coding unit 141, an error correction coding unit 142, and a second error detection coding unit 143.

The first error detection coding unit 141 and the error correction coding unit 142 perform the same processes as those of the error detection coding unit 121 and the error correction coding unit 122 of Fig. 7.

The second error detection coding unit 143 adds check bits to a data signal, for example, by using CRC codes. A data length (code block) to which coding of the second error detection coding unit 143 is applied may be different from that of the first error detection coding unit 141 or the error correction coding unit 142. For example, the first error detection coding unit 141 may perform coding on transport blocks, and the second error detection coding unit 143 may perform coding in units of resource blocks. In this embodiment, the CRC coding is performed in units of resource blocks for ease of description.

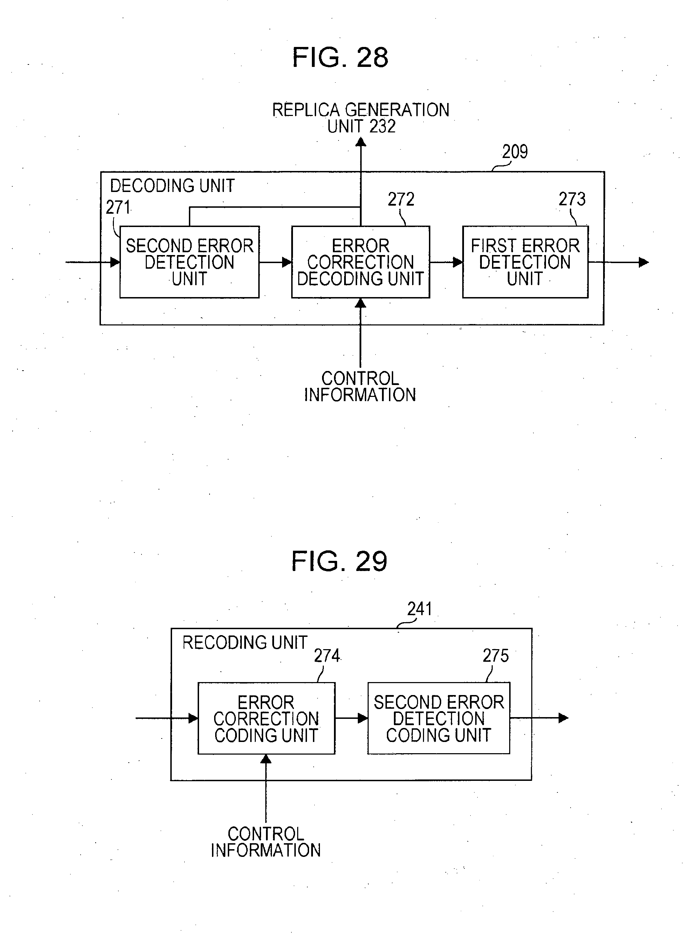

Fig. 28 is a configuration diagram of the decoding unit of the reception station device of this embodiment.

The decoding unit 209 is configured to include a second error detection unit 271, an error correction decoding unit 272, and a first error detection unit 273.

The second error detection unit 271 performs, for example, cyclic redundancy check on the input coding bit sequence to check the presence or absence of an error. The number of bit errors is acquired from the error check result, and according to conditions, the output of the coding bit sequence is switched between the error correction decoding unit 272 and the remodulating unit 242 of the replica generation unit 262. In a case of outputting to the error correction decoding unit 272, the check bits are removed from the input coding bit sequence, and the result is output to the error correction decoding unit 272. In a case where the input coding bit sequence is a soft determination bit sequence, the coding bit sequence is converted into a hard determination bit sequence by the second error detection unit 271 to be subjected to error detection.

The error correction decoding unit 272 performs the same process as that of the error correction decoding unit 221 of Fig. 10. In addition, the first error detection unit 273 also performs the same process as that of the error detection unit 222 of Fig. 10.

Fig. 29 is a configuration diagram of the recoding unit in the replica generation unit of the reception station device of this embodiment.

The recoding unit 241 of the replica generation unit 232 is configured to include an error correction coding unit 274 and a second error detection coding unit 275.

The error correction coding unit 274 performs the same process as that of the error correction coding unit 142 of Fig. 27. In addition, the second error detection coding unit 275 also performs the same process as that of the second error detection coding unit 143 of Fig. 27.

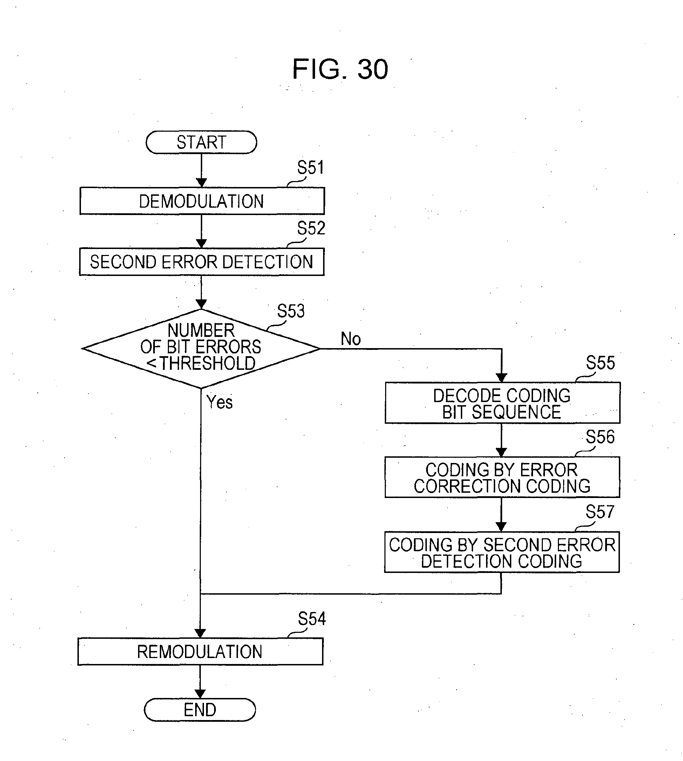

Fig. 30 is a flowchart of processes from demodulation to remodulation of an undesired signal in a signal removal process of this embodiment.

First, a symbol sequence input from the layer demapping unit 207 is demodulated by the demodulating unit 208 to output a coding bit sequence (Step S51).

Bit errors are detected from the coding bit sequence in each code block by the second error detection unit 271 of the decoding unit 209 (Step S52), and the number of detected bit errors and a threshold are compared to each other (Step S53). The relationship between the number of bit errors and the threshold is a branch condition between whether the signal from the demodulating unit 208 is sent to the replica generation unit 232 and whether the signal processed by the error correction decoding unit 272 of the decoding unit 209 is sent to the replica generation unit 232. Examples of a method of setting the threshold of the number of bit errors include setting a fixed value in advance, setting a variable corresponding to a transmission environment such as a reception SINR, and the like. A comparison method is, for example, comparison with the average of the number of a plurality of bit errors, comparison with the minimum number of bit errors, comparison with the maximum number of bit errors, or the like.

A map Mᵢ for comparison between the number of errors and the threshold is a position of a resource map ResourceMapᵢ^{u} to which a reception station u in an i-th layer subjected to the demodulation process is allocated and is a position where a resource ResourceMapᵢ₊₁=∪ResourceMapᵢ₊₁^{v} to which a reception station in a layer one level above is allocated is monitored. Here, v is the reception station number which uses the same radio resource as the radio resource to which the reception station u in the i+1-th layer is allocated. That is, the comparison process is not performed on the resource which will not be demodulated or decoded in the layer one level above, and the comparison is performed in each unit resource of the resource map that satisfies Expression (6).

[Expression 6] ${M}_{i} = {ResourceMap}_{i}^{u} ∩ {ResourceMap}_{i + 1}$

Here, as a specific example of a map generation process, the interference cancellation process in the reception process of the reception station UE31 of Fig. 4 is described. The interference cancellation of the signal addressed to the reception station UE1 and the signal addressed to the reception station UE21 is needed until the signal addressed to the reception station UE31 is decoded. A resource map to which the data signal addressed to the reception station UE1 is allocated is {1, 2, 3, 4}, a resource map to which the data signal of the reception station UE21 is allocated is {1, 2}, and a resource map to which the desired data signal of the reception station UE31 is allocated is {1}. Therefore, ResourceMap₁={1, 2, 3, 4}, ResourceMap₂={1, 2}, and ResourceMap₃^{UE31}={1} are obtained. First, the interference cancellation process of the first layer is performed. At this time, a map for actually comparing the number of errors is M₁={1, 2, 3, 4}∩{1, 2}={1, 2}, and the comparison between the number of errors and the threshold in the radio resource numbers 1 and 2 is performed. Subsequently, in the interference cancellation process of the first layer, M₂={1, 2}∩{1}={1} is obtained, and the comparison between the number of errors and the threshold in the radio resource numbers 1 is performed. This embodiment is described by using sets but may also be expressed as bitmaps for implementation.

In a case where the number of detected errors obtained by the error detection process is lower than the threshold (Yes in Step S53), it is determined that data is normally transmitted, and the coding bit sequence is output to the remodulating unit 242 in the replica generation unit 232. The coding bit sequence input to the remodulating unit 242 is modulated in the modulation method corresponding to the demodulating unit 208 to generate a replica symbol sequence (Step S54).

In a case where the number of bit errors is higher than the threshold (No in Step S53), it is determined that many bit errors are present and thus the error correction process needs to be performed, and the coding bit sequence is output to the error correction decoding unit 272. The coding bit sequence input to the error correction decoding unit 272 is decoded by the decoding method corresponding to the error correction coding method on the transmission station side to generate a data bit sequence (Step S55). The obtained data bit sequence is output to the replica generation unit 232. The error correction coding corresponding to the error correction coding method on the transmission side is performed by the error correction coding unit 274 of the recoding unit 241 in the replica generation unit 232 (Step S56), the check bits corresponding to the second error detection coding unit 143 on the transmission side are added by the second error detection coding unit 275 of the recoding unit 241 (Step S57), and finally, modulation is performed thereon in the modulation method corresponding to the demodulating unit 208 to generate a replica symbol sequence (Step S54).

Hereinabove, the first embodiment has been described. In this embodiment, the configuration of the transmission station device provided with the coding unit that performs error detection coding in two stages and the configuration of the reception station device provided with the corresponding decoding unit are described. However, this embodiment is not limited thereto, and the error detection coding may be performed in three or more stages.

### (Second Embodiment)

Hereinafter, a second embodiment will be described. In the first embodiment, the branch determination of the replica signal generation process is performed by using the error detection code. However, when the error detection code is added, check bits are further added, and thus redundancy of the transmission signal is increased, resulting in slight deterioration of data transmission efficiency. In this embodiment, focusing on that an error rate significantly affects the channel state and the modulation method, the branch determination of the replica signal generation process is performed by using a power ratio of the multiplexed signal.

The configuration of the transmission station device and the configuration of the reception station device according to this embodiment are the same as those of the first embodiment. Here, the process of the decoding unit 209 of the reception station device is different from that of the first embodiment, and thus the process of the decoding unit 209 will be described below.

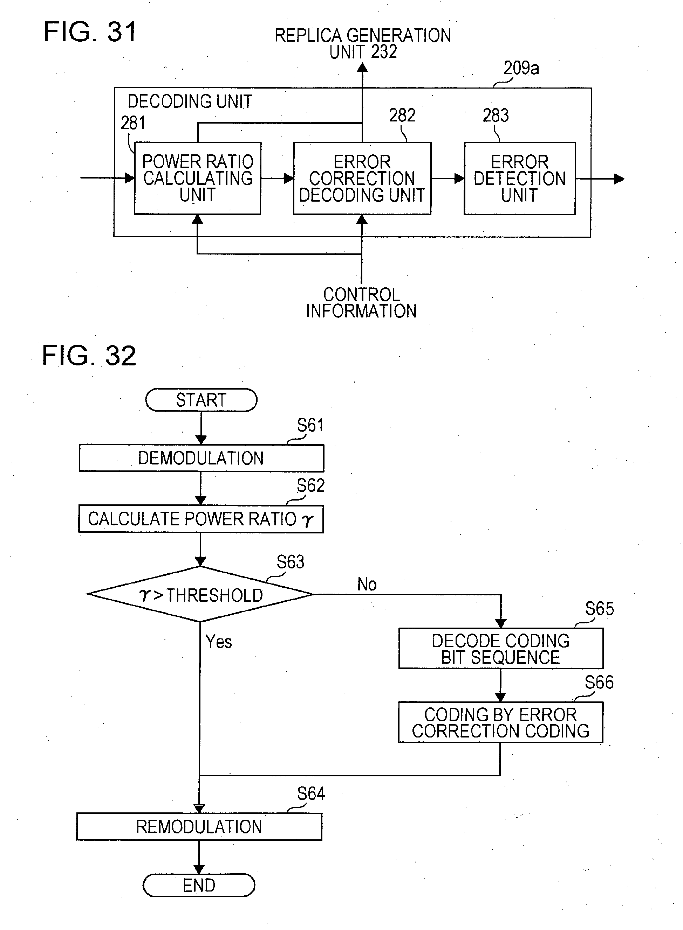

Fig. 31 is a configuration diagram of the decoding unit of the reception station device of this embodiment.

A decoding unit 209a is configured to include a power ratio calculating unit 281, an error correction decoding unit 282, and an error detection unit 283.

The power ratio calculating unit 281 calculates a reception power ratio of the input data signal addressed to the reception station and the multiplexed data signal addressed to the other reception station. When it is assumed that data signal reception power per unit resource of the reception station allocated to an i-th layer in a case of using a k-th unit radio resource is Pᵢ^{(k)}, the reception power ratio γᵢ^{(k)} of the multiplexed signal is expressed by the following Expression (7).

[Expression 7] ${γ}_{i}^{\left(k\right)} = {P}_{i}^{\left(k\right)} / \left({Σ}_{j > i}⁢{P}_{i}^{\left(k\right)}+β\right)$

Here, ∑_{j>i}Pⱼ^{(k)} is the reception power of the multiplexed data signal addressed to the other reception, and β is a noise term. As the noise power which is substituted for the noise term, noise power is acquired by transmitting a reference signal at zero power on the transmission station side and measuring the reception power on the reception station side. In a case where noise power is not acquired, β is set to 0. The signal power of the data signal reception power Pᵢ^{(k)} and β is calculated by using the reception signal such as the reference signal. However, this embodiment is not limited thereto, and the signal power may be notified by radio control information.

The Expression (7) is an effective calculation expression in a case where the noise power is very smaller than the existing power or the reception power. However, β is not 0 due to the interference between cells in a cellular communication method in many cases. In addition, when the reference signal is transmitted at zero power or the noise power is notified, overhead increases. Here, when SNRᵢ^{(k)}=Pᵢ^{(k)}/β and SINRᵢ^{(k)}=∑_{j≥i}Pⱼ^{(k)}/β are defined, the Expression (7) can be changed to Expression (8).

[Expression 8] ${γ}_{i}^{\left(k\right)} = {SNR}_{i}^{\left(k\right)} / \left({SINR}_{j}^{\left(k\right)}-{SNR}_{i}^{\left(k\right)}+1\right)$

Here, when a case of using a power notification method by the reference signal of Fig. 19 is exemplified, SNRᵢ^{(k)} is the reception signal to noise ratio of the reference signal addressed to UE1, and SINRᵢ^{(k)} is the reception signal to noise ratio of the reference signal addressed to UE2. That is, by using the power notification method by the reference signal, γᵢ^{(k)} can be accurately calculated without acquiring the noise power.

The power ratio calculating unit switches the output of the input coding bit sequence between the error correction decoding unit 282 and the remodulating unit 242 of the replica generation unit 262 according to the condition of the reception power ratio γᵢ^{(k)} calculated by the Expression (7) or the Expression (8). In addition, the power ratio calculating unit is also called a branch unit.

The error correction decoding unit 282 and the error detection unit 283 respectively perform the same processes as those of the error correction decoding unit 282 and the error detection unit 283 of Fig. 10.

Fig. 32 is a flowchart of processes from demodulation to remodulation of an undesired signal in the signal removal process of this embodiment.

First, the symbol sequence input from the layer demapping unit 207 is demodulated by the demodulating unit 208 to output the coding bit sequence (Step S61).

Subsequently, the reception power ratio γᵢ^{(k)} of the multiplexed signal is calculated by the power ratio calculating unit 281 (Step S62), and the branch determination of the decoding process is performed by the comparison between the calculation result and the threshold (Step S63). That is, the relationship between the reception power ratio and the threshold is a branch condition between whether the signal from the demodulating unit 208 is sent to the replica generation unit 232 and whether the signal processed by the error correction decoding unit 282 of the decoding unit 209a is sent to the replica generation unit 232. The map Mᵢ for comparison between the reception power ratio and the threshold is the same as that of the branch determination process by the number of errors of the transmission/reception stations configuration 3 of the first embodiment. The method of setting the threshold is not limited to this embodiment. For example, the threshold may be set in advance or may be notified by the radio control information.

In a case where the reception power ratio γᵢ^{(k∈Mi)} allocated by the comparison map is higher than the threshold (Yes in Step S63), the power calculating unit 281 determines that transmission is performed in an environment with good transmission conditions in the multiplexing layer and switches to a process in with decoding is not performed. The coding bit sequence output to the demodulating unit 208 is not input to the error correction decoding unit 209, and is output to the remodulating unit 242 in the replica generation unit 232 (Step S64). The symbol sequence modulated by the remodulating unit 242 is used for the interference cancellation as a replica signal.

On the other hand, in a case where the reception power ratio γᵢ^{(k∈Mi)} allocated by the comparison map is lower than the threshold (Yes in Step S63), the power calculating unit 281 determines that transmission is performed in an environment with bad transmission conditions in the multiplexing layer and performs the process of performing decoding on the error correction code. That is, the coding bit sequence output to the demodulating unit 208 is input to the error correction decoding unit 282 in the decoding unit 209a and is subjected to decoding corresponding to the error correction code (Step S65), and the data bit sequence is output to the error correction coding unit 251 in the replica generation unit 232. The coding bit sequence is generated by the error correction coding unit 251 (Step S66) and is subjected to the remodulation process (Step S64) to generate a replica symbol sequence.

The process of calculating the reception power ratio is performed by the power calculating unit in this embodiment, but may also be calculated by the control information acquisition unit or the channel estimation unit according to the method of notifying the transmission power.

In addition, the process of calculating the reception power ratio is performed by the power calculating unit in this embodiment, but may also be calculated on the transmission station to be notified to the reception station. In this case, channel attenuation information and noise power are measured by the reception station in advance, the information is notified to the transmission station, estimated data signal reception power is calculated by using the data signal transmission power and the channel attenuation information on the transmission station side, and the reception power ratio is calculated by using the Expression (7).

Hereinabove, the second embodiment has been described.

### (Third Embodiment)

In this embodiment, an example in which dual coding is performed by the coding unit of the transmission station device will be described.

The configuration of the transmission station device and the basic configuration of the reception station device according to this embodiment are the same as those of Figs. 6, 8, 9, and 12. Here, the process of the coding unit 101 of the transmission station device and the processes of the decoding unit 209 of the reception station device and the recoding unit 241 in the replica generation unit are different from those of the first embodiment. Therefore, the processes of the coding unit 101, the recoding unit 241, and the decoding unit 209 will be described below.

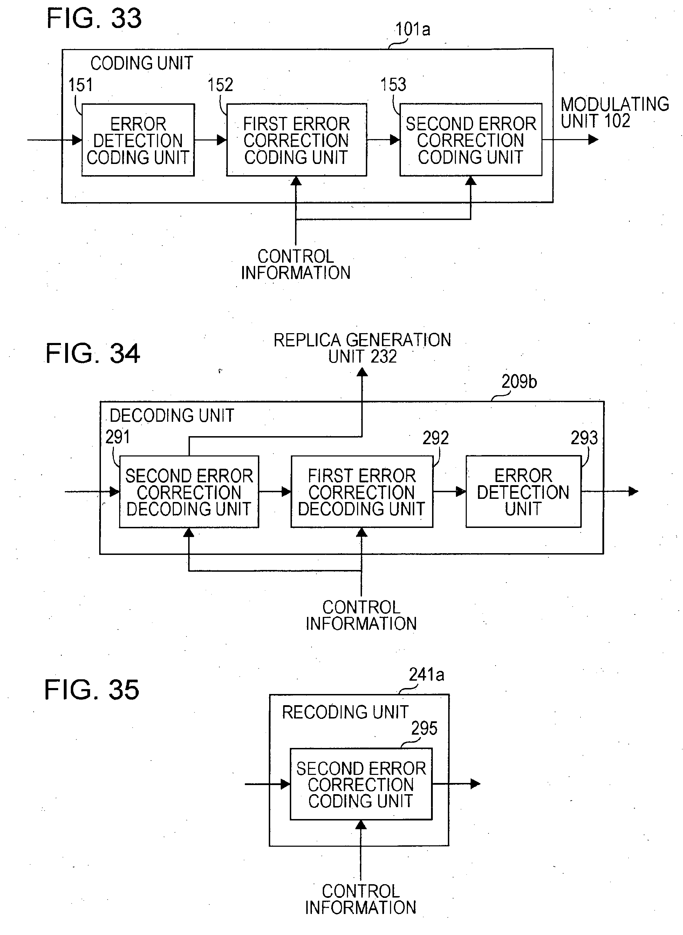

Fig. 33 is a configuration diagram of the coding unit of the transmission station device of this embodiment.

A coding unit 101a includes an error detection coding unit 151, a first error correction coding unit 152, and a second error correction coding unit 153.

The error detection coding unit 151 performs the same process as that of the error detection coding unit 121 of Fig. 7.

The first error correction coding unit 152 performs error correction coding on the input data signal to output a first coding bit sequence. As the error correction coding method, for example, a coding method having high error correction performance such as turbo coding or LDPC is used.

The second error correction coding unit 153 further performs the error correction coding on the first coding bit sequence input from the first error correction coding unit 152 to output a second coding bit sequence to the modulating unit 102. As the error correction coding method, for example, an error correction coding method having a lower calculation amount than that of the error correction coding method set by the first error correction coding unit 152, such as Reed-Solomon (RS) coding or convolutional coding is used. A data length (code block) to which coding of the second error correction coding unit 153 is applied may be different from that of the first error correction coding unit 152 or the error detection coding unit 151.

Fig. 34 is a configuration diagram of a decoding unit 209b of the reception station device of this embodiment.

The decoding unit 209b is configured to include a second error correction decoding unit 291, a first error correction decoding unit 292, and an error detection unit 293.

The second error correction decoding unit 291 performs error correction decoding corresponding to the coding rate information input from the control information acquisition unit 210 on the coding bit sequence (hereinafter, the coding bit sequence input from the demodulating unit 208 to the second error correction decoding unit 291 is called a second coding bit sequence) input from the demodulating unit 208 to acquire a first coding bit sequence.

The first error correction decoding unit 292 performs error correction decoding corresponding to the coding rate information input from the control information acquisition unit 210 on the first coding bit sequence input from the second error correction decoding unit 291 to acquires the data signal.

The error detection unit 293 performs the same process as that of the error detection unit 222 of Fig. 10.

Fig. 35 is a configuration diagram of the recoding unit mounted in the replica generation unit of the device of the reception station UE2 of this embodiment.

A recoding unit 241 a of this embodiment is configured to include a second error correction coding unit 295.

The second error correction coding unit 295 of Fig. 35 performs the same process as that of the second error correction coding unit 153 of Fig. 30. The first coding bit sequence input from the decoding unit 209 is input to the second error correction coding unit 295, and is subjected to error correction coding corresponding to the coding rate information input from the control information acquisition unit 215 of the control signal processing unit 210b to generate and a replica coding bit sequence. The recoding unit 241 a uses the same error correction coding method as that on the transmission side.

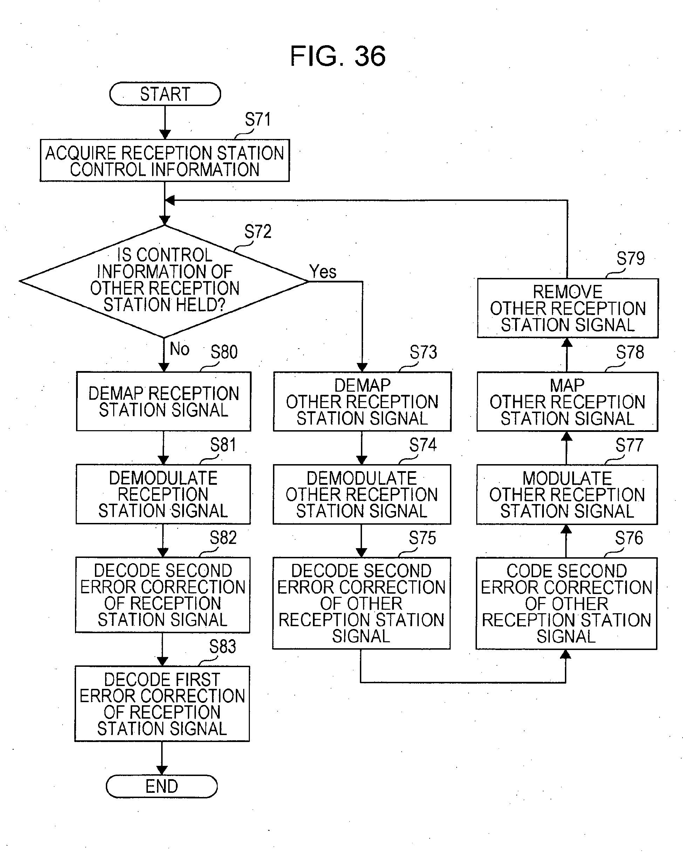

Fig. 36 is a flowchart of a process of acquiring a desired data signal addressed to the reception station by the non-orthogonally multiplexed reception station in this embodiment. The processes of this embodiment are the same as those of the first embodiment illustrated in Fig. 14. However, as a difference from the processes of the first embodiment, as illustrated in Step S75, the process of the interference data signal is performed through the second error correction decoding, and the first error correction decoding is not performed. On the other hand, the process of the desired data signal is performed through the second error correction decoding and the first error correction decoding (Steps S82 and S83). The other processes are the same as the processes of Fig. 14.

Accordingly, a decoding process delay can be reduced while the error correction is also performed on the replica symbol.

Hereinabove, the configuration of the transmission station, the configuration of the reception station, and the reception process in the third embodiment have been described. The configuration of the transmission station device provided with the coding unit that performs the two different types of error correction coding and the configuration of the reception station device provided with the decoding unit corresponding to the configuration of the transmission station device have been described. However, this embodiment is not limited thereto, and three or more different types of error correction coding processes may be performed.

While the embodiments of the invention has been described in detail with reference to the drawings, the specific configurations are not limited to the embodiments, and design and the like in a range that does not depart from the concept of the invention also belong to the appended claims. In addition, various changes of the invention can be made in the scope of the appended claims, and an embodiment obtained by appropriately combining technical means disclosed in the different embodiments also belongs to the technical scope of the invention. In addition, a configuration in which elements described in each of the embodiments are substituted with elements having the same effects is also included.

The programs executed by the transmission station device and the reception station device according to the invention are programs that control a CPU or the like to realize the functions of the above-described embodiments according to the invention (programs that cause a computer to perform the functions). In addition, information treated by the devices is temporarily accumulated in a RAM during the processes and is thereafter stored in various types of ROMs or HDDs to be read, corrected, and written by the CPU as necessary. A recording medium that stores the programs may be any of a semiconductor medium (for example, ROM, non-volatile memory card, or the like), an optical storage medium (for example, DVD, MO, MD, CD, BD, or the like), and a magnetic recording medium (for example, magnetic tape, flexible disk, or the like). In addition, the functions of the above-described embodiments are realized by executing the loaded programs, and there may be a case where the functions of the invention are realized by processing the loaded programs in cooperation with an operating system or other application programs on the basis of the instructions of the programs.

In a case of distribution in the market, the programs may be stored in a portable recording medium to be distributed or may be transmitted to a server computer connected over a network such as the Internet. In this case, the recording device of the server computer also belongs to the invention. In addition, the typical function blocks of parts or the entirety of the transmission station device and the reception station device in the above-described embodiments may be individually implemented as processors, or parts or the entirety thereof may be integrated as processors. In addition, a technique for implementing integrated circuits is not limited to LSI and may also be realized by dedicated circuits or general-purpose processors. In addition, in a case where the technique for implementing integrated circuits, which replaces the LSI, is realized by the development of semiconductor technologies, an integrated circuit by the corresponding technique may also be used.

### DESCRIPTION OF REFERENCE NUMERALS

- 101: CODING UNIT
- 102: MODULATING UNIT
- 103: LAYER MAPPING UNIT
- 104: PRECODING UNIT
- 105: MULTI-USER PRECODING UNIT
- 106: FREQUENCY MAPPING UNIT
- 107: IFFTUNIT
- 108: GI INSERTION UNIT
- 109: RADIO TRANSMISSION UNIT
- 110: ANTENNA UNIT
- 111: CONTROL INFORMATION DETERMINING UNIT
- 121: ERROR DETECTION CODING UNIT
- 122: ERROR CORRECTION CODING UNIT
- 131: SUPERPOSITION COMBINING UNIT
- 141: FIRST ERROR DETECTION CODING UNIT
- 142: ERROR CORRECTION CODING UNIT
- 143: SECOND ERROR DETECTION CODING UNIT
- 151: ERROR DETECTION CODING UNIT
- 152: FIRST ERROR CORRECTION CODING UNIT
- 153: SECOND ERROR CORRECTION CODING UNIT
- 201: ANTENNA
- 202: RADIO SIGNAL PROCESSING UNIT
- 203: GI REMOVAL UNIT
- 204: FFT UNIT
- 205: FREQUENCY DEMAPPING UNIT
- 206: SIGNAL DEMULTIPLEXING UNIT
- 207: LAYER DEMAPPING UNIT
- 208: DEMODULATING UNIT
- 209: DECODING UNIT
- 210: CONTROL SIGNAL PROCESSING UNIT
- 211: CHANNEL ESTIMATION UNIT
- 215: CONTROL INFORMATION ACQUISITION UNIT
- 216: DATA SIGNAL PROCESSING SELECTION UNIT
- 221: ERROR CORRECTION DECODING UNIT
- 222: ERROR DETECTION UNIT
- 231: INTERFERENCE CANCELLATION UNIT
- 232: REPLICA GENERATION UNIT
- 241: RECODING UNIT
- 242: REMODULATING UNIT
- 243: LAYER REMAPPING UNIT
- 244: REPRECODING UNIT
- 245: FREQUENCY REMAPPING UNIT
- 246: CHANNEL PROCESSING UNIT
- 251: ERROR CORRECTION CODING UNIT
- 261: INTERFERENCE CANCELLATION UNIT
- 262: REPLICA GENERATION UNIT
- 271: SECOND ERROR DETECTION UNIT
- 272: ERROR CORRECTION DECODING UNIT
- 273: FIRST ERROR DETECTION UNIT
- 274: ERROR CORRECTION CODING UNIT
- 275: SECOND ERROR DETECTION CODING UNIT
- 281: POWER RATIO CALCULATING UNIT
- 282: ERROR CORRECTION DECODING UNIT
- 283: ERROR DETECTION UNIT
- 291: SECOND ERROR CORRECTION DECODING UNIT
- 292: FIRST ERROR CORRECTION DECODING UNIT
- 293: ERROR DETECTION UNIT
- 295: SECOND ERROR CORRECTION CODING UNIT

## Claims

1. A first reception station device which communicates with a transmission station device,
wherein first control information for controlling a data signal addressed to the first reception station device and second control information for controlling a data signal of a second reception station device are acquired from the transmission station device.

2. The first reception station device according to claim 1,
wherein the first control information includes unique information of the second reception station device.

3. The first reception station device according to claim 1,
wherein the second control information is coded by using unique information of the first reception station device.

4. The first reception station device according to claim 1,
wherein a resource block that includes the data signal addressed to the first reception station device and a resource block that includes the data signal addressed to the second reception station device at least partially overlap with each other.

5. The first reception station device according to any one of claims 1 to 4, comprising:
a decoding unit which performs two or more error detection processes,
wherein the decoding unit performs the two or more error correction detection processes on the data signal addressed to the first reception station device, or performs at least one of the error correction detection processes on the data signal addressed to the second reception station device.

6. The first reception station device according to any one of claims 1 to 4, comprising:
a decoding unit which performs two or more error correction decoding processes,
wherein the decoding unit performs the two or more error correction decoding processes on the data signal addressed to the first reception station device, or performs at least one of the error correction decoding processes on the data signal addressed to the second reception station device.

7. A transmission station device which communicates with a first reception station device,
wherein the transmission station device notifies the first reception station device of first control information for controlling a data signal addressed to the first reception station device and second control information for controlling a data signal addressed to a second reception station device.

8. The transmission station device according to claim 7,
wherein the first control information includes unique information of the second reception station device.

9. The transmission station device according to claim 7,
wherein the second control information is coded by using unique information of the first reception station device.

10. The transmission station device according to claim 7,
wherein a resource block that includes the data signal addressed to the first reception station device and a resource block that includes the data signal addressed to the second reception station device at least partially overlap with each other.

11. The transmission station device according to any one of claims 7 to 10, comprising:
a coding unit which performs two or more error detection coding processes,
wherein the coding unit performs the two or more error detection coding processes on the data signal addressed to the first reception station device.

12. The transmission station device according to any one of claims 7 to 10, comprising:
a coding unit which performs two or more error correction coding processes,
wherein the decoding unit performs the two or more error correction coding processes on the data signal addressed to the first reception station device.

13. A communication system in which a transmission station device communicates with a first reception station device,
wherein the transmission station device notifies the first reception station device of first control information for controlling a data signal addressed to the first reception station device and second control information for controlling a data signal addressed to a second reception station device, and
the first reception station device acquires the first control information and the second control information from the transmission station device.

14. A communication method of a first reception station device which communicates with a transmission station device, comprising:
acquiring, from the transmission station device, first control information for controlling a data signal addressed to the first reception station device and second control information for controlling a data signal addressed to a second reception station device.

15. A communication method of a transmission station device which communicates with a first reception station device, comprising:
notifying the first reception station device of first control information for controlling a data signal addressed to the first reception station device and second control information for controlling a data signal addressed to a second reception station device.

16. An integrated circuit which is realized in a first reception station device that communicates with a transmission station device,
wherein the integrated circuit realizes a function of acquiring, from the transmission station device, first control information for controlling a data signal addressed to the first reception station device and second control information for controlling a data signal addressed to a second reception station device.

17. An integrated circuit which is realized in a transmission station device that communicates with a first reception station device,
wherein the integrated circuit realizes a function of notifying the first reception station device of first control information for controlling a data signal addressed to the first reception station device and second control information for controlling a data signal addressed to a second reception station device.
